# EUROPEAN PATENT APPLICATION

(11) **EP 4 653 298 A1**
(43) Date of publication of application: **26.11.2025**
(21) Application number: 24744717.0
(22) Date of filing: 18.01.2024
(51) Int. Cl.: B62D 57/028, B21F 15/06, B25J 5/00, B25J 5/02, B25J 13/08, E04C 5/16, E04G 21/12, G05D 1/43, G06T 7/00

(54) **ROBOT**

(30) Priority: 20.01.2023 JP 2023007172; 20.01.2023 JP 2023007174; 20.01.2023 JP 2023007176; 20.01.2023 JP 2023007177; 20.01.2023 JP 2023007182; 20.01.2023 JP 2023007187; 10.08.2023 JP 2023131029
(71) Applicant: MAX CO., LTD., Tokyo 103-8502 (JP)
(72) Inventor: AZAMI, Takanari, Tokyo 103-8502 (JP); AGEHARA, Kigen, Tokyo 103-8502 (JP)
(74) Representative: Samson & Partner Patentanwälte mbB
(86) International application number: PCT/JP2024/001330
(87) International publication number: WO 2024/154797

(57) **Abstract**

One aspect of the present disclosure provides a robot comprising a body portion, a forward drive portion that is provided in front of the body portion in a first direction, and that drives the robot in the first direction, and a rear drive portion that is provided behind the body portion in the first direction, and that drives the robot in the first direction, wherein the forward drive portion and the rear drive portion are configured to be relatively movable along a second direction perpendicular to the first direction.

## Description

### TECHNICAL FIELD

The present embodiment relates to a robot.

### BACKGROUND ART

Conventionally, for example, a rebar binding robot has been proposed that automates rebar binding work for binding the intersection portion where a plurality of rebars intersect each other using wires or the like, after traveling autonomously over the plurality of rebars. For example, Patent Literature 1 discloses a self-propelled working robot that can be used for rebar construction. In the working robot disclosed in Patent Literature 1, the ground surfaces of the left and right wheels are formed in a V-shape, and by bringing the rebar in the longitudinal direction into contact with the V-shaped valley part, the robot is configured to be capable of moving along and over the rebar in the longitudinal direction while preventing derailing.

### CITATION LIST

### PATENT LITERATURE

Patent Literature 1:JP2019-039174A

### SUMMARY OF INVENTION

### TECHNICAL PROBLEM

In the technology disclosed in Patent Literature 1, since the ground surface of the wheel is formed in a V-shape, the wheels engage with the rebar at the V-shaped valley part during traveling, and thus traveling may become extremely difficult when the left and right rebars are not parallel, for example. In this regard, it is conceivable to configure the wheel to be able to turn by making the ground surface of the wheel flat or the like. However, there is a limit to the improvement of turning performance when trying to achieve turning only by providing a rotation speed difference between the left and right drive mechanisms. For example, the turning performance could be improved by reducing the dimensions between the left and right drive mechanisms. However, in the case of rebar binding machines or the like, it is necessary to mount heavy binding machines or the like, which may worsen the weight balance of the entire equipment.

An object of the present disclosure is to provide a robot that can improve turning performance with a simple configuration.

### SOLUTION TO PROBLEM

According to an aspect of the present disclosure, there is provided a robot including: a main body; a front driver which is provided in front of the main body in a first direction and which is configured to drive the robot in the first direction; and a rear driver which is provided behind the main body in the first direction and which is configured to drive the robot in the first direction, in which the front driver and the rear driver are configured to be relatively movable along a second direction perpendicular to the first direction.

### ADVANTAGEOUS EFFECTS OF INVENTION

The present disclosure provides a robot that can improve turning performance with a simple configuration.

### BRIEF DESCRIPTION OF DRAWINGS

[FIG. 1] FIG. 1 is an overall perspective view of a rebar binding robot 100, which is an example of the present disclosure, as viewed obliquely from above.
[FIG. 2] FIG. 2 is an overall perspective view of the rebar binding robot, which is an example of the present disclosure, as viewed obliquely from below.
[FIG. 3A] FIG. 3A is a plan view of the rebar binding robot 100, as viewed from above (above in a Z direction).
[FIG. 3B] FIG. 3B is a plan view of the rebar binding robot 100 in a state where a front traveling unit 12A has moved relatively to the right with respect to a rear traveling unit 12B, as viewed from above (above in the Z direction).
[FIG. 4A] FIG. 4A is a plan view of the rebar binding robot 100, as viewed from below (below in the Z direction).
[FIG. 4B] FIG. 4B is a plan view of the rebar binding robot 100 in a state where the front traveling unit 12A has moved relatively to the right with respect to the rear traveling unit 12B, as viewed from below (below in the Z direction).
[FIG. 5] FIG. 5 is a view for illustrating a configuration of the front traveling unit 12A.
[FIG. 6] FIG. 6 is a perspective view of a state of the rebar binding robot 100 with a rebar binding unit 110 removed, as viewed obliquely from above.
[FIG. 7] FIG. 7 is a perspective view of the rebar binding robot 100 with the rebar binding unit 110 removed, as viewed obliquely from above.
[FIG. 8] FIG. 8 is a view illustrating a functional block configuration of the rebar binding robot 100.
[FIG. 9] FIG. 9 is a view of the rebar binding robot 100 traveling along a first rebar R10, as viewed from a Y direction.
[FIG. 10] FIG. 10 is a view of the rebar binding robot 100 traveling along the first rebar R10, as viewed from an X direction.
[FIG. 11] FIG. 11 is a view of the rebar binding robot 100 that has stopped traveling and is performing binding work, as viewed from the Y direction.
[FIG. 12] FIG. 12 is a view of the rebar binding robot 100 performing binding work, as viewed from the X direction.
[FIG. 13] FIG. 13 is a view of the rebar binding robot 100 performing binding work, as viewed from below in the Z direction.
[FIG. 14A] FIG. 14A illustrates an image of the vicinity of an intersection point of the first rebar R10 and a second rebar R20, taken by a 3D distance camera.
[FIG. 14B] FIG. 14B schematically illustrates an image of the vicinity of the intersection point of the first rebar R10 and the second rebar R20.
[FIG. 15A] FIG. 15A is a schematic side view of the rebar binding robot 100, as viewed from a horizontal direction (X direction).
[FIG. 15B] FIG. 15B is a schematic top view of the rebar binding robot 100, as viewed from above (above in the Z direction).
[FIG. 16] FIG. 16 is a view schematically illustrating an image captured by a first sensor 130a.
[FIG. 17] FIG. 17 is a schematic view for illustrating template matching.
[FIG. 18] FIG. 18 is a view schematically illustrating the rebar binding robot 100 for illustrating a method for estimating the intersection point.
[FIG. 19] FIG. 19 is a flowchart of a method for estimating an intersection point c12 in an embodiment of the present disclosure.
[FIG. 20] FIG. 20 is a flowchart regarding lateral movement of the rebar binding robot 100.
[FIG. 21] FIG. 21 is a flowchart of a method for moving the rebar binding robot 100 along the first rebar.
[FIG. 22A] FIG. 22A is a view of the rebar binding robot 100 in lateral movement, as viewed from the rear.
[FIG. 22B] FIG. 22B is a view of the rebar binding robot 100 in lateral movement, as viewed obliquely from above.
[FIG. 23A] FIG. 23A is a view of the rebar binding robot 100 in lateral movement, as viewed from the rear.
[FIG. 23B] FIG. 23B is a view of the rebar binding robot 100 in lateral movement, as viewed obliquely from above.
[FIG. 24A] FIG. 24A is a view of the rebar binding robot 100 in lateral movement, as viewed from the rear.
[FIG. 24B] FIG. 24B is a view of the rebar binding robot 100 in lateral movement, as viewed obliquely from above.
[FIG. 25A] FIG. 25A is a view of the rebar binding robot 100 in lateral movement, as viewed from the rear.
[FIG. 25B] FIG. 25B is a view of the rebar binding robot 100 in lateral movement, as viewed obliquely from above.
[FIG. 26A] FIG. 26A is a view of the rebar binding robot 100 in lateral movement, as viewed from the rear.
[FIG. 26B] FIG. 26B is a view of the rebar binding robot 100 in lateral movement, as viewed obliquely from above.
[FIG. 27A] FIG. 27A is a view of the rebar binding robot 100 in lateral movement, as viewed from the rear.
[FIG. 27B] FIG. 27B is a view of the rebar binding robot 100 in lateral movement, as viewed obliquely from above.
[FIG. 28] FIG. 28 is a schematic view of a rebar binding robot 200 according to another embodiment of the present disclosure, as viewed from below in the Z direction.

### DESCRIPTION OF EMBODIMENTS

The following is a description of the present embodiment with reference to the accompanying drawings. In order to facilitate understanding of the description, the same components in each drawing will be given the same reference numerals whenever possible, and the redundant descriptions thereof will be omitted.

The following is a description of the configuration of a binding device 100 for the embodiment of the present disclosure. In the present embodiment, the binding device is a rebar binding device that binds a plurality of rebars arranged intersecting each other, and may be, for example, a rebar binding robot (an example of a "robot"). In the following, a case will be described as an example in which the binding device 100 is a rebar binding robot as an example, and the binding device 100 will also be referred to as a rebar binding robot 100. The X, Y, and Z axes may be illustrated in each drawing. The X, Y, and Z axes form the three-dimensional Cartesian coordinates of the righthand system. Hereafter, the arrow direction on the X axis may be referred to as the front part on the X axis; and +X direction, right side of the X direction or right side on the X axis, or the direction opposite to the arrow may be referred to as the rear part on the X axis, -X direction, left side of the X direction, or left side on the X axis. The same is true for the other axes. The front part on the X axis and the rear part on the X axis may be referred to as an "upper side" or an "upper part" and a "lower side" or a "lower part", respectively. The plane orthogonal to the X, Y, or Z axis may be referred to as the YZ, ZX, or XY plane, respectively. However, these directions are used for convenience only for describing the relative positions. Therefore, these directions and the like do not define an absolute positional relationship.

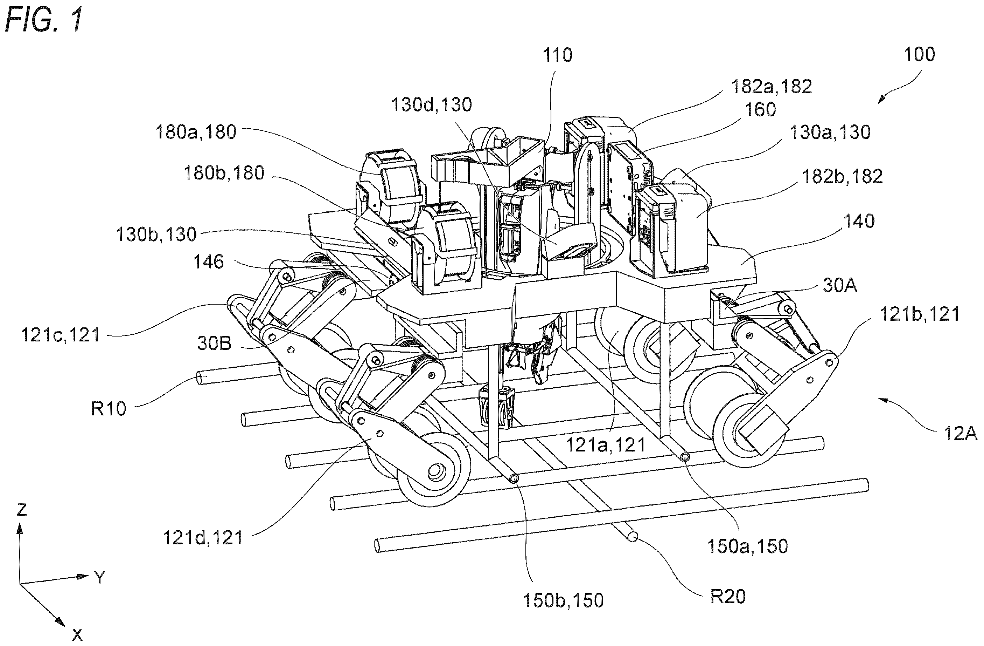

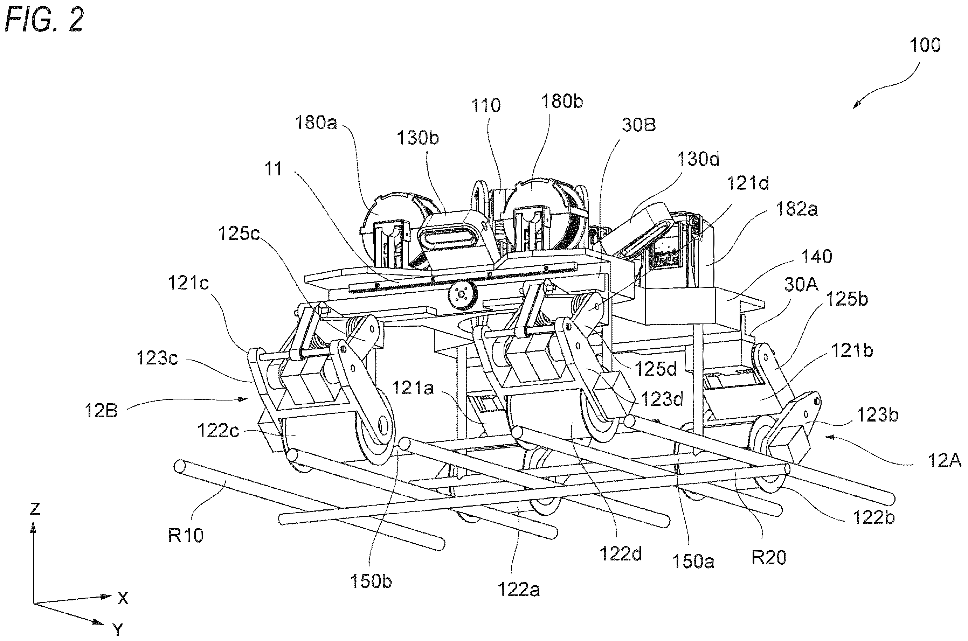

FIG. 1 is an overall perspective view of a rebar binding robot 100, which is an example of the present disclosure, as viewed obliquely from above. FIG. 2 is an overall perspective view of the rebar binding robot, which is an example of the present disclosure, as viewed obliquely from below. As illustrated in FIGS. 1 and 2, the rebar binding robot 100 according to the embodiment of the present disclosure includes a rebar binding unit 110 (an example of a "rebar binding machine"), a traveling unit 121, and a sensor unit 130 (an example of a "detector"). The rebar binding robot 100 may further include other components such as a main body unit 140 (an example of a "main body"), a support bar 150, a control unit 160, a reel 180 (first reel 180a and second reel 180b), a battery 182 (first battery 182a and second battery 182b), and a memory device 198 (not illustrated). In FIG. 1, the +Y direction may be referred to as a front side of the rebar binding robot 100, the negative Y axis direction as a rear side of the rebar binding robot 100, the +X direction as a right side of the rebar binding robot 100, and the negative X axis direction as a left side of the rebar binding robot 100, respectively.

FIGS. 1 and 2 illustrate a rebar group R including a plurality of rebars R10 (also referred to as "first rebars" or "longitudinal rebars" in the present embodiment) extending in the Y direction. As illustrated in FIGS. 1 and 2, the rebar binding robot 100 is arranged on the rebar group R to travel along the first rebar R10. In addition to the plurality of rebars R10, the rebar group R may also include a plurality of rebars (also referred to as "second rebars R20" or "lateral rebars" in the present embodiment) extending in the X direction.

In the embodiment of the present disclosure, the first rebar R10 is arranged such that the first direction, which is the direction in which the first rebar R10 extends, is parallel to the Y direction. In addition, the second rebar R20 is arranged such that the second direction, which is the direction in which the second rebar R20 extends, is parallel to the X direction. Thus, in the embodiment of the example of the present disclosure, the first rebar R10 and the second rebar R20 are arranged orthogonally to each other. The first rebar R10 and the second rebar R20 are arranged such that a surface formed by the first rebar R10 and the second rebar R20 (also referred to as a "rebar surface" in the present embodiment) is parallel to the XY plane. Therefore, the plane formed by the first rebar R10 and the second rebar R20 is a horizontal plane in the present embodiment. The arrangement of the first rebar R10 and the second rebar R20 is not limited thereto. For example, the first rebar R10 and the second rebar R20 may be arranged so as to be non-perpendicular to each other. For example, the first rebar R10 and the second rebar R20 may be arranged such that the angle between the first rebar R10 and the second rebar R20 is, for example, 30°, 45°, 60°, or other angle. In the embodiment of the present disclosure, the first rebar R10 and the second rebar R20 are arranged orthogonally to each other, but the first rebar R10 and the second rebar R20 may not necessarily be in an orthogonal relationship depending on the location where the first rebar R10 and the second rebar R20 intersect each other, and may be arranged to make an angle of, for example, 85° or more and less than 90°.

The first rebar R10 and the second rebar R20 have a finite length, and the plurality of first rebars R10 or the plurality of second rebars R20 may be connected through joints in the first direction or the second direction, respectively. Furthermore, the first rebar R10 and the second rebar R20 may have ends, for example, the first rebar R10 and the second rebar R20 may have ends R10e and R20e at one and the other end in the first direction and the second direction, respectively.

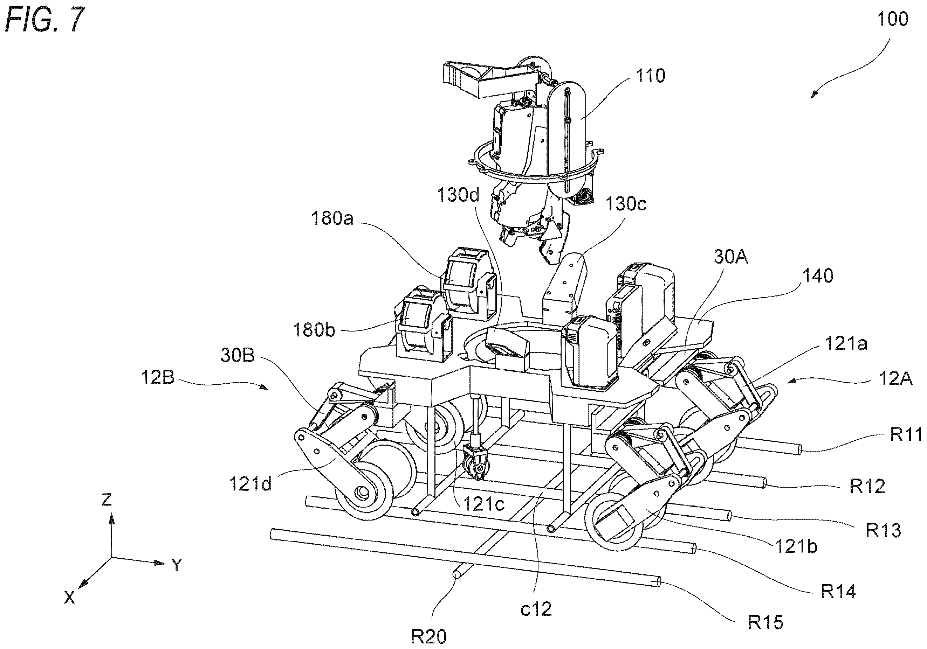

The rebar binding unit 110 is configured to bind an intersection point c12 (FIG. 7) between the first rebar R10 and the second rebar R20. The binding operation of the intersection point c12 of the first rebar R10 and the second rebar R20 by the rebar binding unit 110 will be described in detail below.

As illustrated in FIGS. 1 and 2, the traveling unit 121 may include a front traveling unit 12A (an example of a "front driver") provided on the front side, and a rear traveling unit 12B (an example of a "rear driver") provided on the rear side. The front traveling unit 12A may include a connection portion 30A (an example of a "front base portion") provided in the main body unit 140 to extend in the left-right direction (an example of a "second direction"), a traveling unit 121a (also referred to as a "first traveling unit", an example of a "left front driver") provided in the connection portion 30A on the left side of the rebar binding robot 100, and a traveling unit 121b (also referred to as a "second traveling unit", an example of a "right front driver") provided in the connection portion 30A on the right side of the rebar binding robot 100. The rear traveling unit 12B may include a connection portion 30B (an example of a "rear base portion") provided in the main body unit 140 to extend in the left-right direction, a traveling unit 121c (also referred to as a "third traveling unit", an example of a "left rear driver") provided in the connection portion 30B on the left side of the rebar binding robot 100, and a traveling unit 121d (also referred to as a "fourth traveling unit", an example of a "right rear driver") provided in the connection portion 30B on the right side of the rebar binding robot 100.

The front traveling unit 12A and the rear traveling unit 12B are configured to be movable relative to each other along the left-right direction of the rebar binding robot 100. In particular, the front traveling unit 12A and the rear traveling unit 12B are configured to be relatively movable along the left-right direction when the front traveling unit 12A and/or the rear traveling unit 12B are driving the rebar binding robot 100 in the front-rear direction (an example of a "first direction"). For example, regarding the front traveling unit 12A and the rear traveling unit 12B, the front traveling unit 121a may move relatively to the left in the front-rear direction with respect to the rear traveling unit 12B in response to a control signal for steering the rebar binding robot 100 to the right in the front-rear direction. In addition, for example, regarding the front traveling unit 12A and the rear traveling unit 12B, the front traveling unit 121a may move relatively to the right in the front-rear direction with respect to the rear traveling unit 12B in response to a control signal for steering the rebar binding robot 100 to the left in the front-rear direction.

In the embodiment of the present disclosure, the traveling unit 121 is arranged on the rebar group R such that the rebar binding robot 100 advances in the Y direction. The first traveling unit 121a, the second traveling unit 121b, the third traveling unit 121c, and the fourth traveling unit 121d each have a first roller portion 122a, a second roller portion 122b, a third roller portion 122c, and a fourth roller portion 122d, and the first roller portion 122a, the second roller portion 122b, the third roller portion 122c, and the fourth roller portion 122d are configured to travel on one first rebar R10 of the plurality of first rebars R10 along the Y direction (first direction), which is the extension direction of the first rebar R10.

In the present embodiment, the traveling unit 121 is an example of a moving unit (moving unit 120). The moving unit 120 may have a configuration of moving units other than the traveling unit 121 instead of the traveling unit 121 or in addition to the traveling unit 121.

In the embodiment of the present disclosure, the case where the first traveling unit 121a, the second traveling unit 121b, the third traveling unit 121c, and the fourth traveling unit 121d are configured to advance in the Y direction is described as an example, but the first traveling unit 121a, the second traveling unit 121b, the third traveling unit 121c, and the fourth traveling unit 121d may be configured to advance in a direction other than the Y direction.

For example, the first traveling unit 121a, the second traveling unit 121b, the third traveling unit 121c, and the fourth traveling unit 121d may advance in a direction that is inclined from the Y direction at an angle of several to several tens of degrees. For example, the first traveling unit 121a, the second traveling unit 121b, the third traveling unit 121c, and the fourth traveling unit 121d may advance in a direction inclined from the Y direction in the +X direction or the -X direction at an angle of several to several tens of degrees. For example, when the orientation of the rebar binding robot 100 is inclined from the Y direction due to the presence of foreign objects on the first rebar R10 or other reasons, the direction in which the first traveling unit 121a, the second traveling unit 121b, the third traveling unit 121c, and the fourth traveling unit 121d advance is inclined from the Y direction at least temporarily in the +X direction or the -X direction. In that case as well, for example, the first traveling unit 121a, the second traveling unit 121b, the third traveling unit 121c, and the fourth traveling unit 121d may advance in a direction (in the -X direction or the +X direction) that returns the inclination of the orientation of the rebar binding robot 100 in the Y direction, and accordingly, the rebar binding robot 100 may advance on the first rebar R10 to substantially follow the first rebar R10. As a result, it is possible to continuously perform the binding operation of the intersection point c12 of the first rebar R10 and the second rebar R20 using the rebar binding unit 110 of the rebar binding robot 100.

In addition, for example, at a construction site where the first rebar R10 is arranged in a curved shape, the first traveling unit 121a, the second traveling unit 121b, the third traveling unit 121c, and the fourth traveling unit 121d may be configured to advance while drawing a curve to follow the curved first rebar R10, and in this case, the first direction, which is the extension direction of the first reinforcing bar R10, may be different for each point that constitutes the curve.

As illustrated in FIGS. 1, 2, and 3A, the sensor unit 130 (an example of a "detection unit") includes a sensor 130a, a sensor 130b, a sensor 130c, and a sensor 130d (in the present embodiment, also referred to as a "first sensor", a "second sensor", a "third sensor", and a "fourth sensor", respectively). The first sensor 130a and the second sensor 130b are arranged to be spaced apart from each other along the Y direction (the direction in which the straight line connecting the first sensor 130a and the second sensor 130b extends in the present embodiment is also referred to as a "third direction") in FIGS. 1 and 2. In addition, the fourth sensor 130d is arranged on the side surface opposite to the side surface on which the third sensor 130c is provided (the side surface on the far side of the paper in FIGS. 1 and 2) in the rebar binding robot 100, and the third sensor 130c and the fourth sensor 130d are arranged to be spaced apart from each other along the direction that intersects with the Y direction in FIGS. 1 and 2 (X direction in the example illustrated in FIGS. 1 and 2, the direction in which the straight line connecting the third sensor 130c and the fourth sensor 130d extends in the present embodiment is also referred to as a "fourth direction").

The first sensor 130a, the second sensor 130b, the third sensor 130c, and the fourth sensor 130d are configured to be capable of detecting the first rebar R10 and/or the second rebar R20. For example, the first sensor 130a and the second sensor 130b may be configured to be capable of detecting the first rebar R10, and the third sensor 130c and the fourth sensor 130d may be configured to be capable of detecting the second rebar R20. Otherwise, the first sensor 130a, the second sensor 130b, the third sensor 130c, and the fourth sensor 130d may all be configured to be capable of detecting the first rebar R10 and the second rebar R20.

The first sensor 130a, the second sensor 130b, the third sensor 130c, and the fourth sensor 130d (examples of an "obstacle detection unit") may be configured to be capable of detecting obstacles. Otherwise, the rebar binding robot 100 may include a sensor capable of detecting obstacles (an example of an "obstacle detection unit") in addition to the first sensor 130a, the second sensor 130b, the third sensor 130c, and the fourth sensor 130d.

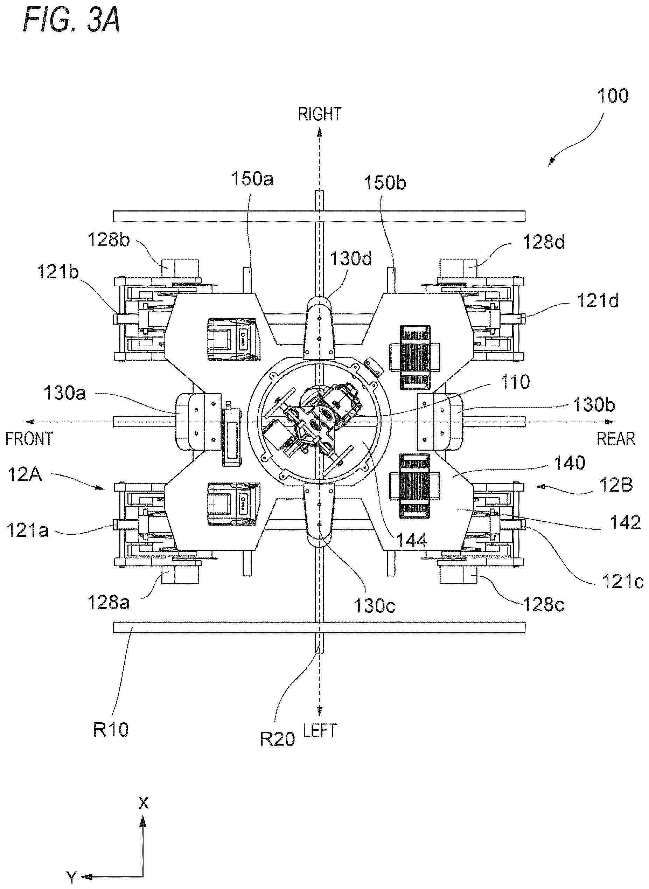

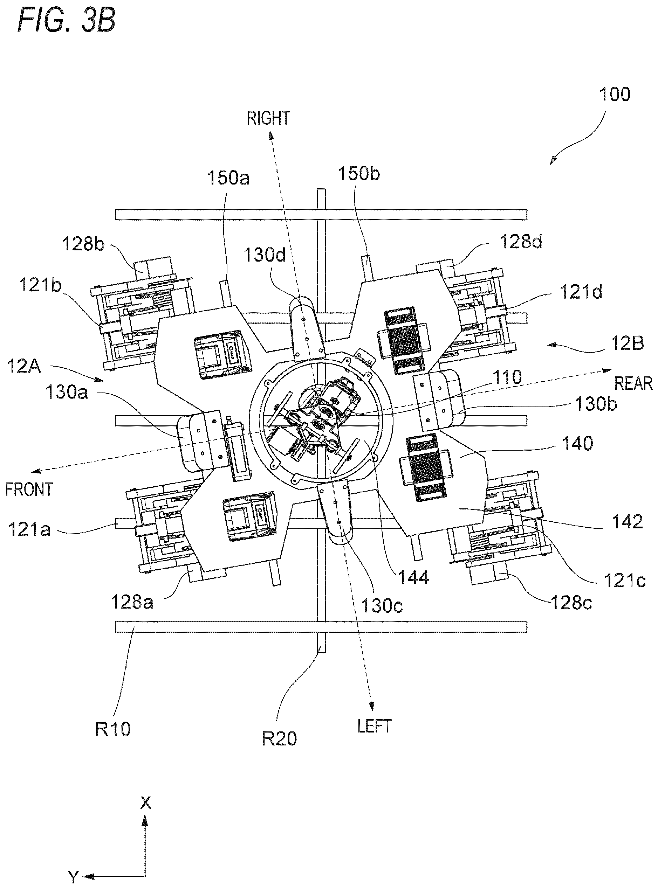

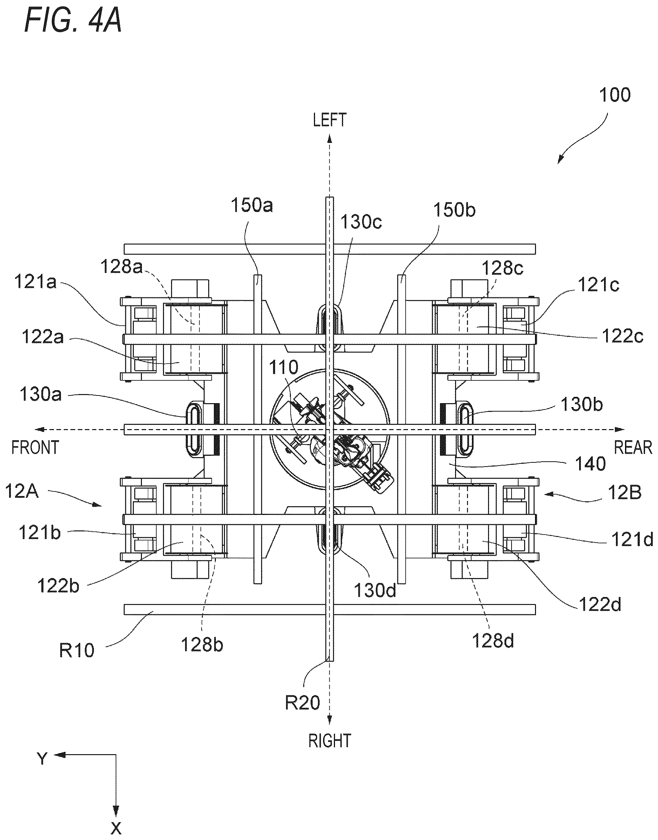

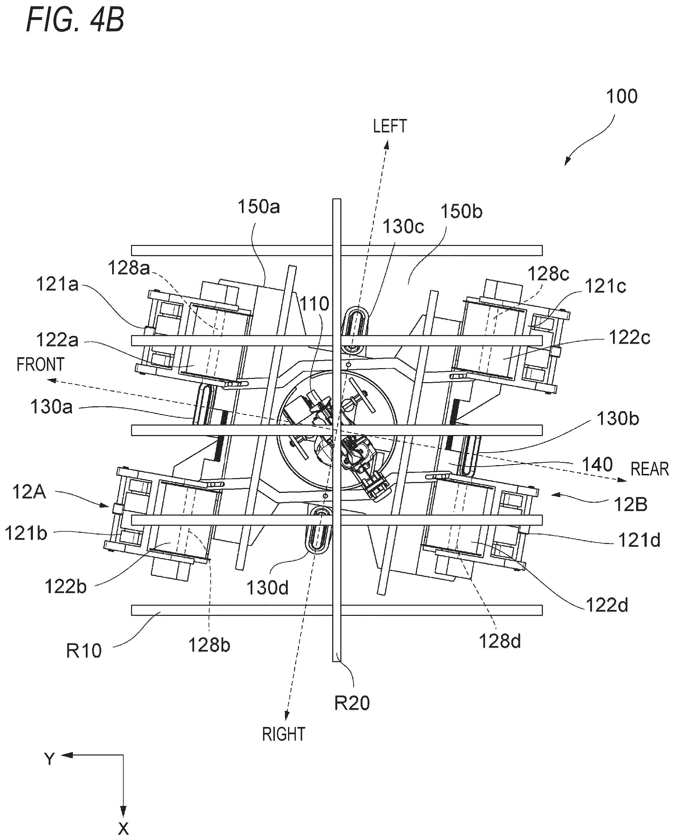

FIGS. 3A and 3B illustrate a plan view of the rebar binding robot 100, as viewed from above (above in the Z direction). In addition, FIGS. 4A and 4B illustrate plan views of the rebar binding robot 100, as viewed from below (below in the Z direction). In particular, FIGS. 3B and 4B illustrate a state where the front traveling unit 12A has moved relatively to the right with respect to the rear traveling unit 12B.

As can be seen from FIGS. 3A and 4A, the first traveling unit 121a and the second traveling unit 121b may be arranged on one side and the other side of the fourth direction (X direction) (left and right sides in the X direction, respectively, in FIG. 3A) with respect to the first sensor 130a. In addition, the third traveling unit 121c and the fourth traveling unit 121d may be arranged on one side and the other side of the fourth direction (X direction) with respect to the second sensor 130b. In other words, the first sensor 130a may be arranged between the first traveling unit 121a and the second traveling unit 121b in the fourth direction. Similarly, the second sensor 130b may be arranged between the third traveling unit 121c and the fourth traveling unit 121d in the fourth direction.

Furthermore, as illustrated in FIGS. 3A and 4A, the third sensor 130c may be arranged between the first traveling unit 121a and the third traveling unit 121c in the third direction (Y direction in FIGS. 3A and 4A), and similarly, the fourth sensor 130d may be arranged between the second traveling unit 121b and the fourth traveling unit 121d in the third direction (Y direction).

Furthermore, as illustrated in FIG. 4A, for example, the first sensor 130a may be arranged, as viewed from below, on a straight line passing through a rotation shaft 128a of the first roller portion 122a forming the first traveling unit 121a and a rotation shaft 128b of the second roller portion 122b forming the second traveling unit 121b, or behind (in the -Y direction in FIG. 4A) the straight line passing through the rotation shaft 128a and the rotation shaft 128b. Similarly, the second sensor 130b may be arranged, as viewed from below, on a straight line passing through a rotation shaft 128c of the third roller portion 122c forming the third traveling unit 121c and a rotation shaft 128d of the fourth roller portion 122d forming the fourth traveling unit 121d, or in front of (in the +Y direction in FIG. 4A) the straight line passing through the rotation shaft 128c and the rotation shaft 128d. Specific examples of the sensor unit 130 are described below.

In addition, as illustrated in FIG. 3A, 4A, or the like, the first sensor 130a is arranged in front of the main body unit 140 in the Y axis direction (+Y direction). Similarly, the second sensor 130b is arranged behind the main body unit 140 in the Y axis direction (-Y direction). The third sensor 130c and the fourth sensor 130d are arranged on the left and right sides in the X direction as viewed from above in FIG. 3A of the main body unit 140, respectively. That is, as can be seen, for example, from FIG. 4A and the like, in the present embodiment, the first sensor 130a, the second sensor 130b, the third sensor 130c, and the fourth sensor 130d are arranged on the outer edge or inside the outer edge of a rectangle virtually formed by connecting the approximate centers of the first traveling unit 121a, the second traveling unit 121b, the third traveling unit 121c, and the fourth traveling unit 121d in a plan view of the rebar binding robot 100. In addition, the rectangle virtually formed by the first traveling unit 121a to the fourth traveling unit 121d may be a square, for example, when the distance between the respective traveling units in the X direction and the Y direction is approximately equal, and in this case, the first sensor 130a to the fourth sensor 130d may be positioned on the outer edge of the virtual square or on the inside thereof. Depending on the arrangement configuration of the first traveling unit 121a to the fourth traveling unit 121d, any quadrilateral other than a rectangle or a square may be formed virtually by the first traveling unit 121a to the fourth traveling unit 121d, and in this case, the first sensor 130a to the fourth sensor 130d may be arranged on or inside the outer edge of the virtual quadrilateral.

FIGS. 3B and 4B illustrate a state where the front traveling unit 12A has moved relatively to the right with respect to the rear traveling unit 12B. For example, in the rebar binding robot 100 which is moving to the front by the traveling unit 121, when the front traveling unit 12A moves relatively to the right with respect to the rear traveling unit 12B from the state illustrated in FIGS. 3A and 4A to the state illustrated in FIGS. 3B and 4B, due to the frictional force generated between each roller portion 122 and each rebar, the advancing direction of each roller portion 122 is oriented to the left, and accordingly, the direction of the rebar binding robot 100 is oriented to the left with respect to the advancing direction. As a result, the rebar binding robot 100 can turn to the left in the advancing direction. Conversely, for example, in the rebar binding robot 100 which is moving to the front by the traveling unit 121, when the front traveling unit 12A moves relatively to the left with respect to the rear traveling unit 12B, due to the frictional force generated between each roller portion 122 and each rebar, the advancing direction of each roller portion 122 is oriented to the right, and accordingly, the direction of the rebar binding robot 100 is oriented to the right with respect to the advancing direction. As a result, the rebar binding robot 100 can turn to the right in the advancing direction.

A case where the first sensor 130a, the second sensor 130b, the third sensor 130c, and the fourth sensor 130d are arranged on the outer edge or inside the outer edge of a rectangle virtually formed by connecting the approximate centers of the first traveling unit 121a, the second traveling unit 121b, the third traveling unit 121c, and the fourth traveling unit 121d, which were described above, has been described as an example, but the present disclosure is not limited thereto. For example, depending on the arrangement configuration of the first traveling unit 121a, the second traveling unit 121b, the third traveling unit 121c, and the fourth traveling unit 121d, and/or the shape of the main body unit 140, the first sensor 130a, the second sensor 130b, the third sensor 130c, and the fourth sensor 130d may be arranged differently. For example, the first sensor 130a, the second sensor 130b, the third sensor 130c, and the fourth sensor 130d may be arranged on the outer edge or outside the outer edge of a rectangle virtually formed by connecting the approximate centers of the first traveling unit 121a, the second traveling unit 121b, the third traveling unit 121c, and the fourth traveling unit 121d in a plan view of the rebar binding robot 100.

As illustrated in FIGS. 1 and 3A, the main body unit 140 may have a main body upper surface 142. The main body upper surface 142 may have, for example, a circular hole 144 formed in the vicinity of the center portion, and the rebar binding unit 110 may be arranged to penetrate the hole 144.

In the present embodiment, the rebar binding robot 100 may include, for example, two support bars 150 (first support bar 150a and second support bar 150b, respectively). The first support bar 150a and the second support bar 150b are bars extending in one direction, and are provided, for example, parallel to the fourth direction (X direction in FIGS. 1, 2, 3A, and 4A). Thus, in the embodiment of the present disclosure, the first support bar 150a and the second support bar 150b are provided, for example, parallel in the horizontal direction. As illustrated in FIGS. 1, 2, 3A, and 4A, the first support bar 150a and the second support bar 150b may be spaced apart from each other in the Y direction (third direction). As described in more detail below, the first support bar 150a and the second support bar 150b may be configured to support the main body unit 140 or the like of the rebar binding robot 100, for example, when the rebar binding robot 100 moves horizontally (the X direction in FIGS. 1, 2, 3A, and 4A, the fourth direction in the rebar binding robot 100).

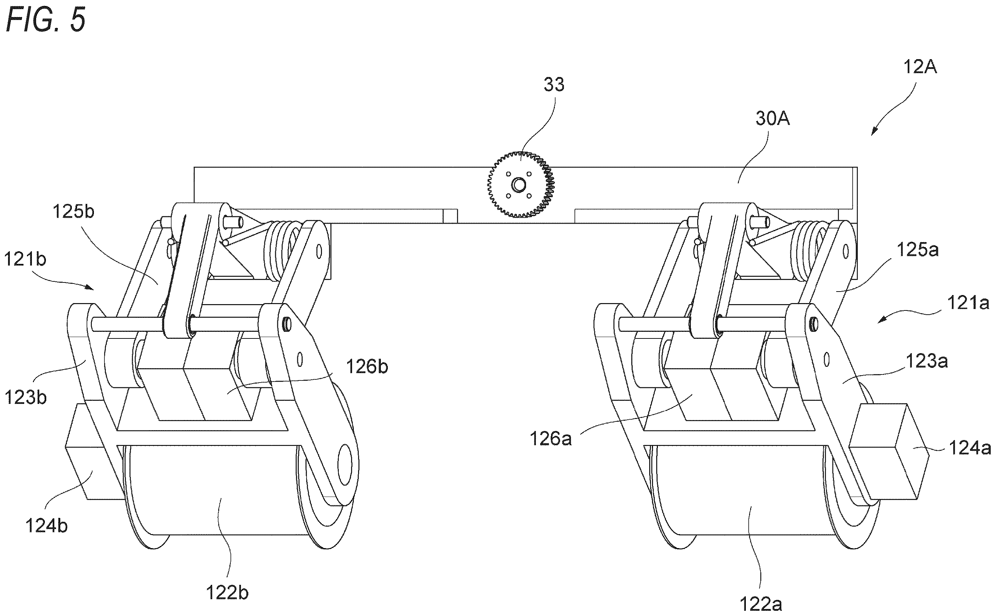

Next, the configuration of the front traveling unit 12A is described with reference to FIG. 5. The rear traveling unit 12B has a basically common configuration with the front traveling unit 12A. Therefore, in the following description, the configuration of the front traveling unit 12A will be described, and a description of the rear traveling unit 12B will be omitted.

The front traveling unit 12A includes, for example, the connection portion 30A connected to the main body unit 140 and extending in the left-right direction of the rebar binding robot 100, the traveling unit 121a provided on the connection portion 30A on the left side of the rebar binding robot 100, and the traveling unit 121b provided on the connection portion 30A on the right side of the rebar binding robot 100. The connection portion 30A has, for example, a bar shape extending in the left-right direction of the rebar binding robot 100. A lateral movement roller 33 is provided at the center part in the longitudinal direction of the connection portion 30A. The lateral movement roller 33 meshes with, for example, a drive rack 11 (refer to FIG. 2) provided on the main body unit 140. The drive rack 11 provided in the main body unit 140, for example, has a plurality of teeth that mesh with the outer teeth of the lateral movement roller 33 in a straight line in the left-right direction of the rebar binding robot 100. The lateral movement roller 33 rotates based on the driving force transmitted from a front lateral movement motor 146a. When the lateral movement roller 33 rotates, the lateral movement roller 33 moves relatively with respect to the drive rack 11, and the main body unit 140 and the front traveling unit 12A move relatively with respect to each other in the left-right direction in the rebar binding robot 100.

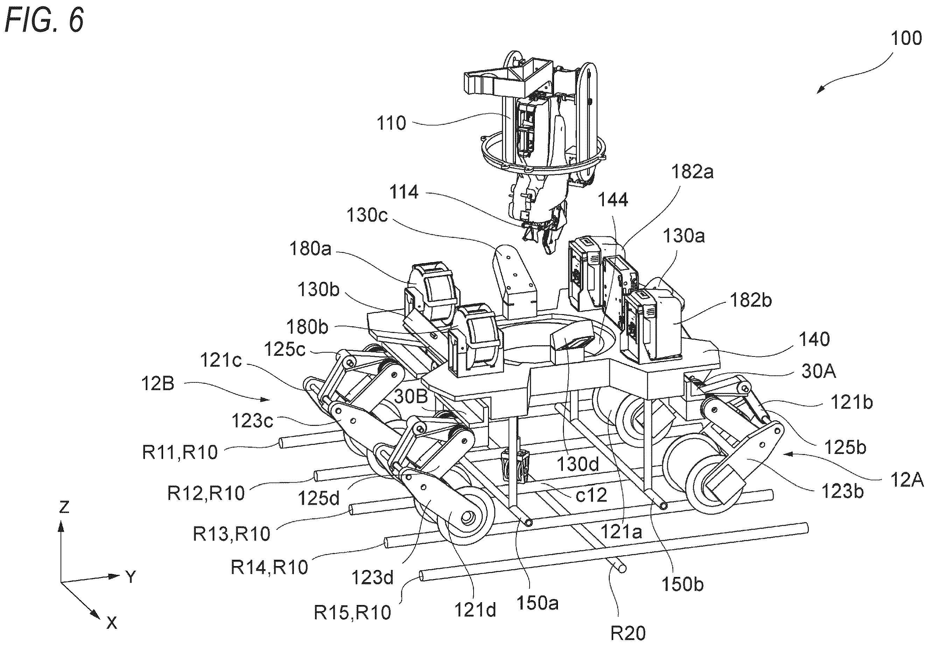

FIG. 6 is a perspective view of a state of the rebar binding robot 100 with the rebar binding unit 110 removed, as viewed obliquely from the rear right. FIG. 7 is a perspective view of the rebar binding robot 100 with the rebar binding unit 110 removed, as viewed obliquely from the front right. As illustrated in FIGS. 6 and 7, the rebar binding unit 110 may be provided to be movable in the up-down direction (Z direction in FIG. 6) in a state where the rebar binding unit 110 has penetrated the hole 144. This is configured, for example, to lower the rebar binding unit 110 and bind the intersection point c12 of the first rebar R10 and the second rebar R20 when the rebar binding robot 100 reaches the intersection point c12 of the first rebar R10 and the second rebar R20. As illustrated in FIGS. 6 and 7, the rebar binding robot 100 has the reels 180a and 180b. The reel 180a and the reel 180b accommodate the wire used to bind rebars, and are configured such that when the rebar binding unit 110 binds the intersection point c12 of the first rebar R10 and the second rebar R20, the wire accommodated in the reel 180a and/or the reel 180b is pulled out to bind the intersection point c12. Although detailed description is omitted, the rebar binding unit 110 has a wire twisting portion 114 (FIG. 6) at one end (a lower end in the Z direction in FIG. 6) of the rebar binding unit 110 that has a wire guide, or the like, and is configured to perform rebar binding work. The rebar binding work of the wire twisting portion 114 may be realized, for example, by functions similar to those of known rebar binding machines.

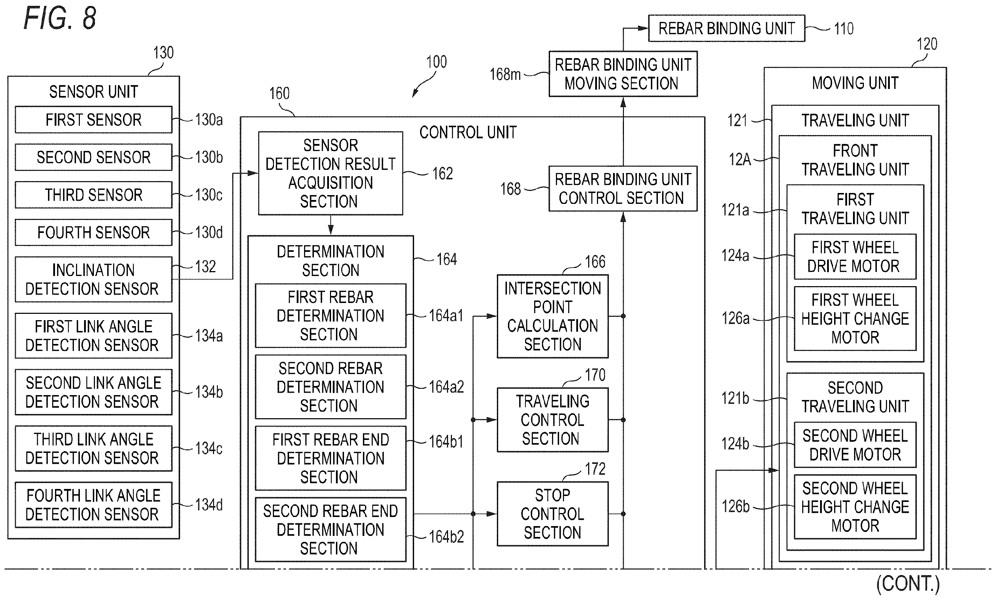

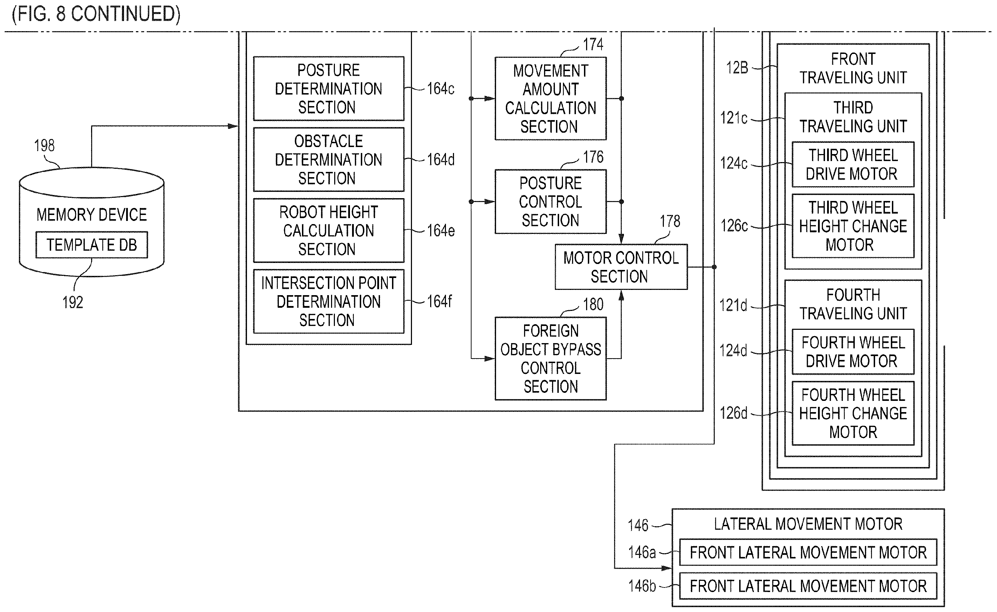

FIG. 8 is a view illustrating a functional block configuration of the rebar binding robot 100. As illustrated in FIG. 8, the rebar binding robot 100 may include, in addition to the rebar binding unit 110, the traveling unit 121, the sensor unit 130, and the like, which were described above, a control unit 160, a lateral movement motor 146, and a memory device 198.

The control unit 160 is configured to control movement (traveling) and binding works performed by the rebar binding robot 100. The control unit 160 may include a sensor detection result acquisition section 162, a determination section 164, an intersection point calculation section 166 (in the present embodiment, also referred to as an "intersection point estimation section" or "intersection point estimation unit"), a rebar binding unit control section 168, a traveling control section 170 (in the present embodiment, also referred to as a "traveling control unit"), a stop control section 172, a movement amount calculation section 174, a posture control section 176, a motor control section 178, and a foreign object bypass control section 188.

In the rebar binding robot 100 of the present embodiment, as illustrated in FIG. 1, the control unit 160 is arranged on the opposite side of the reel 180a and the reel 180b with respect to the rebar binding unit 110 in the Y direction. More specifically, as illustrated in FIG. 1, the reel 180a and the reel 180b are arranged in the -Y direction of the rebar binding unit 110, whereas the control unit 160 is arranged in the +Y direction of the rebar binding unit 110. In particular, immediately after replacing the wire reel (reel 180a and/or reel 180b), the reel with the wire wound therearound becomes relatively heavy, but by arranging the control unit 160 on the opposite side of the rebar binding unit 110, it is possible to balance the weight.

The memory device 198 may include, for example, a memory medium (for example, a semiconductor memory element) or other media for non-transitory storage of one or more computer programs executed in the control unit 160, data used to control the rebar binding robot 100, and the like. The memory device 198 may have, for example, a template database 198t. The template database 198t may store, for example, template images used when detecting the first rebar R10 and/or the second rebar R20, or detecting the end R10e of the first rebar R10 and/or the end R20e of the second rebar R20, using template matching based on the detection results by the sensor unit 130, or data obtained by applying image processing such as frequency analysis to the template images. In addition, the control unit 160 may further have a template data creation section, and may be configured to create template data based on images captured by the sensor unit 130 according to the site where the rebar binding work is to be performed, and store the template data in the template database 198t. The template data stored in the template database 198t may be accumulated, for example, at the timing when new template data is created, or may be deleted at the timing when binding work is ended at each construction site. Alternatively, the created template data may be configured to be held in the template database 198t of the memory device 198 for a certain period of time and then deleted periodically, for example.

The sensor detection result acquisition section 162 acquires the detection results from the sensor unit 130. For example, the detection results of the first sensor 130a, the second sensor 130b, the third sensor 130c, and/or the fourth sensor 130d of the sensor unit 130 may be used to determine the position of the first rebar R10 and/or the second rebar R20 by the first rebar determination section 164al and/or the second rebar determination section 164a2 of the determination section 164. In addition, the detection results of the first sensor 130a, the second sensor 130b, the third sensor 130c, and/or the fourth sensor 130d may be used to determine the position of the end R10e of the first rebar R10 and/or the end R20e of the second rebar R20 by a first rebar end determination section 164b1 and/or a second rebar end determination section 164b2 of the determination section 164.

The determination section 164 may include the first rebar determination section 164a1, the second rebar determination section 164a2, the first rebar end determination section 164b1, the second rebar end determination section 164b2, an obstacle determination section 164c, a posture determination section 164d, a robot height calculation section 164e, and an intersection point determination section 164f. The first rebar determination section 164a1 and the second rebar determination section 164a2 use, for example, the detection results of the first sensor 130a, the second sensor 130b, the third sensor 130c, and/or the fourth sensor 130d acquired by the sensor detection result acquisition section 162 to determine the position of the first rebar R10 and/or the second rebar R20. The first rebar determination section 164a1 and the second rebar determination section 164a2 may determine the position of the first rebar R10 and/or the second rebar R20 by performing template matching based on the captured images that are the detection results of the first sensor 130a to the fourth sensor 130d.

The first rebar end determination section 164b1 and the second rebar end determination section 164b2 use, for example, the detection results of the first sensor 130a, the second sensor 130b, the third sensor 130c, and/or the fourth sensor 130d acquired by the sensor detection result acquisition section 162 to determine the end R10e of the first rebar R10 and/or the end R20e of the second rebar R20. Similarly to the first rebar determination section 164a1 and the second rebar determination section 164a2, the first rebar end determination section 164b1 and the second rebar end determination section 164b2 may also determine the position of the end R10e of the first rebar R10 and/or the end R20e of the second rebar R20 based on template matching.

The robot height calculation section 164e may calculate the height of the rebar binding robot 100 from the rebar group R based on, for example, the detection results of the first sensor 130a, the second sensor 130b, the third sensor 130c, and/or the fourth sensor 130d. For example, when the first rebar R10 and/or the second rebar R20 are imaged (for example, when a range including the first rebar R10 and/or the second rebar R20 is imaged) by the first sensor 130a, the second sensor 130b, the third sensor 130c, and/or the fourth sensor 130d, the robot height calculation section 164e may calculate the height of the rebar binding robot 100 from the rebar group R by calculating the distance of the rebar binding robot 100 from the rebar group R based on a relative size of the first rebar R10 and/or the second rebar R20 in the captured image of the imaged first rebar R10 and/or the second rebar R20.

The height of the rebar binding robot 100 from the rebar group R may be calculated based on the angle of the traveling unit 121, for example. As illustrated in FIG. 5, the traveling unit 121a has a first main body side link portion 125a connected to the main body 140, and a first roller side link portion 123a connected to the first roller portion 122a, and the first main body side link portion 125a and the first roller side link portion 123a may form a link mechanism. In this case, a link angle, which is an angle between the first main body side link portion 125a and the first roller side link portion 123a, may be detected by a first link angle detection sensor 134a (FIG. 8) of the sensor unit 130, and the height of the first traveling unit 121a may be calculated based on the link angle.

Similarly, as illustrated in FIG. 2, the second traveling unit 121b, the third traveling unit 121c, and the fourth traveling unit 121d respectively have a second main body side link portion 125b and a second roller side link portion 123b, a third main body side link portion 125c and a third roller side link portion 123c, and a fourth main body side link portion 125d and a fourth roller side link portion 123d, and the heights of the second traveling unit 121b, the third traveling unit 121c, and the fourth traveling unit 121d may be respectively calculated by detecting link angles formed by the second main body side link portion 125b and the second roller side link portion 123b, the third main body side link portion 125c and the third roller side link portion 123c, and the fourth main body side link portion 125d and the fourth roller side link portion 123d using a second link angle detection sensor 134b, a third link angle detection sensor 134c, and a fourth link angle detection sensor 134d.

The robot height calculation section 164e may calculate the height of the rebar binding robot 100 from the rebar group R based on the heights (heights from the rebar group R) of the first traveling unit 121a, the second traveling unit 121b, the third traveling unit 121c, and the fourth traveling unit 121d calculated in this manner. For example, the height of the rebar binding robot 100 may be calculated from an average value of some or all of the calculated heights of the first traveling unit 121a, the second traveling unit 121b, the third traveling unit 121c, and the fourth traveling unit 121d. Furthermore, for example, when the rebar binding robot 100 is positioned parallel or substantially parallel to a virtual plane formed by the rebar group R, the height of the rebar binding robot 100 may be determined by any one of the heights of the first traveling unit 121a, the second traveling unit 121b, the third traveling unit 121c, and the fourth traveling unit 121d.

As illustrated in FIG. 8, the sensor unit 130 may include an inclination detection sensor 132 in addition to the first sensor 130a to the fourth sensor 130d described above. As the inclination detection sensor 132, for example, a known inclination sensor or horizontal sensor, or other sensor capable of detecting an inclination angle of the rebar binding robot 100 may be used. The sensor detection result acquisition section 162 may also acquire the detection results of the inclination detection sensor 132. Based on the detection results of the inclination detection sensor 132, for example, the posture of the rebar binding robot 100 may be determined by the posture determination section 164d of the determination section 164, and based on the determination result of the posture determination section 164d, the posture control section 176 may drive height change motors 126 (a first height change motor 126a of the first traveling unit 121a, a second height change motor 126b of the second traveling unit 121b, a third height change motor 126c of the third traveling unit 121c, and/or a height change motor 126d of the fourth traveling unit 121d) of the traveling units 121 to adjust the posture of the rebar binding robot 100.

The rebar binding robot 100 may, for example, drive the height change motor 126 based on the detection results of the inclination detection sensor 132 such that the main body unit 140 is parallel to a surface (also referred to as a "rebar surface" in the present embodiment) formed by the first rebar R10 and/or the second rebar R20. For example, when the first rebar R10 and the second rebar R20 are arranged such that the rebar surface extends in the horizontal direction, and when the rebar binding robot 100 is inclined in the X direction, the height of the first traveling unit 121a and the third traveling unit 121c, or the second traveling unit 121b and the fourth traveling unit 121d, among the first traveling unit 121a to the fourth traveling unit 121d, may be changed to adjust the posture of the rebar binding robot 100.

The intersection point calculation section 166 estimates the intersection point c12 between the first rebar R10 and the second rebar R20 by calculating the intersection point c12. The intersection point calculation section 166 may, for example, calculate the position of the intersection point c12 based on the position of the first rebar R10 and the position of the second rebar R20 determined by the first rebar determination section 164a1 and the second rebar determination section 164a2. Based on the calculated position of the intersection point c12, the rebar binding robot 100 may perform binding work using the rebar binding unit 110. Based on the estimated position of the intersection point c12, the motor control section 178 may adjust the position of the rebar binding robot 100 using the first traveling unit 121a, the second traveling unit 121b, the third traveling unit 121c, and/or the fourth traveling unit 121d such that the rebar binding unit 110 is on the intersection point c12.

The rebar binding unit control section 168 controls the movement of the rebar binding unit 110 by controlling a rebar binding unit moving section 168m. The rebar binding unit 110 can take a binding position where the rebar binding unit 110 performs a binding operation to bind the intersection point c12 where the first rebar R10 and the second rebar R20 intersect each other, and a retreat position where the rebar binding unit 110 retreats after the binding operation is completed while moving to the intersection point c12 where the next binding operation is performed. The rebar binding unit 110 moves in the -Z direction when moving from the retreat position towards the binding position, and moves in the +Z direction when moving from the binding position towards the retreat position. Such movement of the rebar binding unit 110 in the Z direction is realized by the rebar binding unit moving section 168m, which is composed of a motor or the like. In addition, a lifting and lowering operation of the rebar binding unit 110 in the Z direction by the rebar binding unit moving section 168m is controlled by the rebar binding unit control section 168.

The rebar binding unit control section 168 also controls the binding operation of the intersection point c12 by the rebar binding unit 110 after the rebar binding unit 110 moves to the binding position. For example, the binding work performed by the rebar binding unit 110 using a wire pulled out from the reel 180 of the wire by a wire pull-out portion is controlled by the rebar binding unit control section 168. For example, after moving the rebar binding robot 100 by the first traveling unit 121a, the second traveling unit 121b, the third traveling unit 121c, and/or the fourth traveling unit 121d such that the rebar binding unit 110 is positioned above the intersection point c12, the rebar binding unit control section 168 may control the rebar binding unit moving section 168m to lower the rebar binding unit 110 to a binding position approaching the intersection point c12, and perform binding at the intersection point c12.

The traveling control section 170 controls the traveling of the rebar binding robot 100. The traveling control section 170 may, for example, control the traveling unit 121 via the motor control section 178 such that the rebar binding robot 100 follows the first rebar R10 on which the rebar binding robot 100 is traveling, based on information such as the position of the first rebar R10 determined by the first rebar determination section 164a1. For example, as illustrated in FIG. 6, when the rebar binding robot 100 travels on a first rebar R12 and a first rebar R14, the drive motors (a first wheel drive motor 124a driving the first roller portion 122a, a second wheel drive motor 124b driving the second roller portion 122b, a third wheel drive motor 124c driving the third roller portion 122c, and/or a fourth wheel drive motor 124d driving the fourth roller portion 122d) of the traveling units 121 may be driven to prevent the rebar binding robot 100 from coming off the first rebar R12 and the first rebar R14.

For example, among the first wheel drive motor 124a, the second wheel drive motor 124b, the third wheel drive motor 124c, and the fourth wheel drive motor 124d, the first wheel drive motor 124a and the third wheel drive motor 124c, which are the drive motors of the first traveling unit 121a and the third traveling unit 121c, which are arranged at the same position or substantially the same position in the X direction, may be accelerated or decelerated relative to the second wheel drive motor 124b and the fourth wheel drive motor 124d, which are the drive motors of the second traveling unit 121b and the fourth traveling unit 121d, which are arranged on the other side in the X direction, to adjust the position of the rebar binding robot 100 and make the rebar binding robot 100 travel to follow the first rebar R10.

Alternatively, the rebar traveling control section 170 may cause the rebar binding robot 100 to travel to follow the first rebar R10, for example, by adjusting the rotation speeds of the first wheel drive motor 124a, the second wheel drive motor 124b, the third wheel drive motor 124c, and/or the fourth wheel drive motor 124d. For example, by setting one or more of the rotation speeds of the first wheel drive motor 124a, the second wheel drive motor 124b, the third wheel drive motor 124c, and the fourth wheel drive motor 124d to a rotation speed different from the rotation speeds of the other wheel drive motors, or by setting the rotation speeds of all of the first wheel drive motor 124a, the second wheel drive motor 124b, the third wheel drive motor 124c, and the fourth wheel drive motor 124d to a rotation speeds different from each other, it becomes possible to allow the rebar binding robot 100 to flexibly follow the first rebar R10.

The stop control section 172 is configured to control the stop operation of the rebar binding robot 100. For example, when the intersection point c12 of the first rebar R10 and the second rebar R20 is calculated by the above-described intersection point calculation section 166, the stop control section 172 may stop the rebar binding robot 100 in order to bind the intersection point c12 with the rebar binding unit 110.

In addition, for example, when the rebar binding robot 100, which has been traveling over the first rebar R12 and the first rebar R14, is determined by the first rebar end determination section 164b1 and/or the second rebar end determination section 164b2 to be in the vicinity of an end R13e of a first rebar R13 or approaching the end R13e based on the detection results of the first sensor 130a, the second sensor 130b, the third sensor 130c, and/or the fourth sensor 130d, the stop control section 172 may control the motor control section 178 to drive and stop the first wheel drive motor 124a to the fourth wheel drive motor 124d, thereby stopping the rebar binding robot 100. In addition, the rebar binding robot 100 may be stopped not only at the end R13e of the first rebar R13, but also when it is determined that the rebar binding robot 100 is in the vicinity of an end R12e of the first rebar R12 and/or an end R14e of the first rebar R14, or the rebar binding robot 100 is approaching the end R12e and/or the end R14e, instead of the end R13e or in addition to the end R13e.

The movement amount calculation section 174 may be configured to calculate the movement amount when the rebar binding robot 100 performs lateral movement (movement in the X direction), for example. For example, as described above, when the first rebar end determination section 164b1 and/or the second rebar end determination section 164b2 determine that the rebar binding robot 100 is in the vicinity of or approaching the end R12e of the first rebar R12 and the end R14e of the first rebar R14, the rebar binding robot 100 completes the rebar binding work at the intersection point c12 on the first rebar R13 arranged between the first rebar R12 and the first rebar R14, moves to another first rebar R10, and starts the rebar binding work at the intersection point c12.

For example, when the rebar binding robot 100 completes rebar binding work at the intersection point c12 on the first rebar R13 and then performs rebar binding work at the intersection point c12 on the first rebar R14, the rebar binding robot 100 moves in the X direction by one interval for the interval in the X direction of the first rebar R10. At this time, the movement amount calculation section 174 may calculate the movement amount based on the interval in the X direction between the adjacent first rebars R10 based on information on the position of the first rebar R10 determined by the first rebar determination section 164a1. Similarly, when the rebar binding robot 100 performs rebar binding work at the intersection point c12 on the first rebar R10 that is spaced apart by two or more in the X direction, the movement amount may be calculated based on the interval between the first rebars R10. Furthermore, the lateral movement (for example, horizontal movement) of the main body unit 140 by the lateral movement motor 146 during the lateral movement may be performed based on the calculated movement amount. The movement amount calculation section 174 may calculate the movement amount in a direction other than the lateral movement amount. For example, the movement amount calculation section 174 may calculate the movement amount of vertical movement (movement in the first direction, Y direction) of the rebar binding robot 100 based on the detection results of each sensor 130, the determination results by the rebar end determination section 164b1 and/or the rebar end determination section 164b2, or the like.

As the sensor unit 130, for example, a camera capable of taking two-dimensional images or three-dimensional images may be used, and based on the detection results of the sensor unit 130, the position of a foreign object may be determined, for example, by the obstacle determination section 164c of the determination section 164. At a construction site where rebars are being assembled, for example, tools or the like may be left on the rebar surface, or workers may be performing work thereon. These may be detected as foreign objects based on the detection results by the sensor unit 130, and based on the foreign object detection results, the foreign object bypass control section 188 may be configured to drive the first wheel drive motor 124a, the second wheel drive motor 124b, the third wheel drive motor 124c, and/or the fourth wheel drive motor 124d via the motor control section 178 to bypass the foreign object. Alternatively, the rebar binding robot 100 may be configured to bypass foreign objects by performing lateral movement.

The control unit 160 is, for example, a processor such as a central processing unit (CPU) that corresponds to a calculation section, and is a control section that controls the execution of computer programs stored in the memory device 198 and calculates and processes data. The processor is a calculation section that executes a program that executes the operations (rebar following and traveling, lateral movement (for example, horizontal movement), rebar binding work, and the like) of the rebar binding robot 100 using each detection data, or the like. Each unit (for example, the sensor detection result acquisition section 162, or the like) of the control unit is realized by the processor executing the program stored in the memory device 198.

The memory device 198 may include, for example, a random access memory (RAM) and a read only memory (ROM). The RAM is a memory unit in which data can be rewritten, and may be composed of, for example, a semiconductor memory element. The RAM may store programs executed by the processor and data (for example, template data used to determine the position of rebars based on the detection results of the sensor unit 130) required to execute the programs. These are merely examples, and data other than these may be stored in the RAM, or some of these may not be stored.

The ROM is a memory unit from which data can be read, and may be composed of, for example, a semiconductor memory element. The ROM may store, for example, programs executed by the control unit 160 and data that is not rewritten.

The program executed by the control unit 160 may be provided by being stored in a computer-readable memory medium such as the memory device 198 (for example, RAM or ROM), or, when the rebar binding robot 100 of the present embodiment has a communication section (not illustrated), the program may be provided via a communication network connected by the communication section.

The above-described physical configuration is merely an example, and in the rebar binding robot 100 according to the embodiment of the present disclosure, the control unit 160 and the memory device 198 do not necessarily have to be configured independently. For example, the rebar binding robot 100 may be equipped with a large-scale integration (LSI) that integrates a processor and a memory. In addition, the rebar binding robot 100 may be equipped with a graphical processing unit (GPU) as the control unit 160, and the various operations described above may be realized by the GPU executing a program.

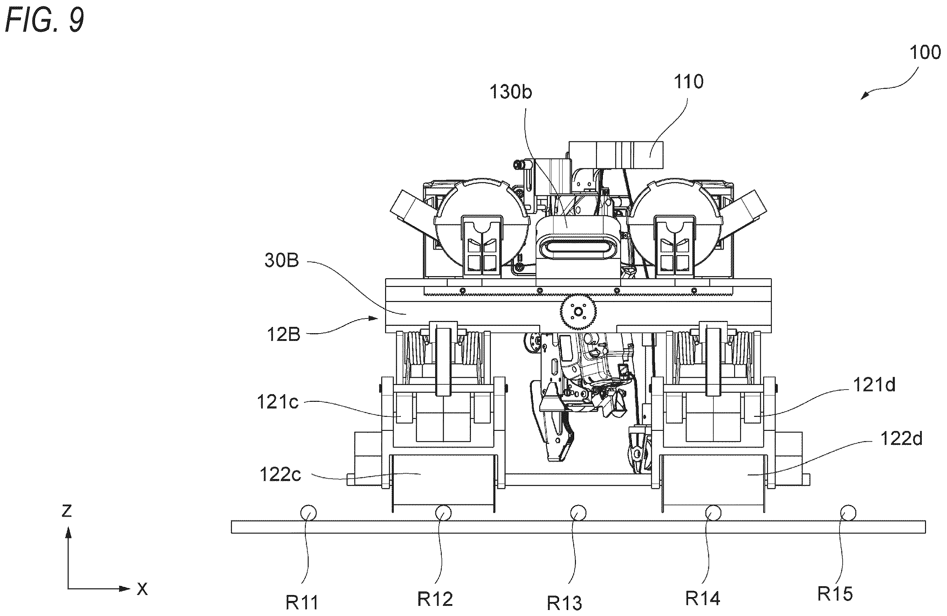

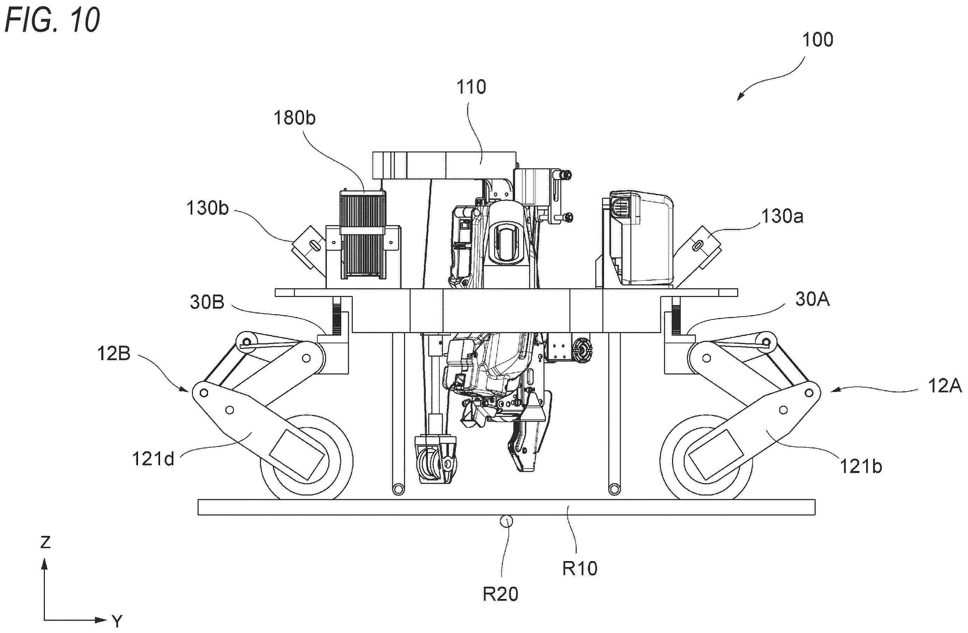

Next, a traveling operation of the rebar binding robot 100 on the rebars will be described with reference to FIGS. 9 and 10. FIG. 9 is a view of the rebar binding robot 100 traveling along the first rebar R10, as viewed from the Y direction (-Y direction). FIG. 10 is a view of the rebar binding robot 100 traveling along the first rebar R10, as viewed from the X direction (+X direction). In FIGS. 9 and 10, the rebar binding robot 100 travels in the first direction (Y direction). As illustrated in FIGS. 9 and 10, when the rebar binding robot 100 is traveling, the third roller portion 122c of the third traveling unit 121c is located on the first rebar R12, and the fourth roller portion 122d of the fourth traveling unit 121d is located on the first rebar R14. As illustrated in FIG. 10, the second roller portion 122b of the second traveling unit 121b also travels on the first rebar R14, similar to the fourth roller portion 122d of the fourth traveling unit 121d. Although not illustrated in FIGS. 9 and 10, the first roller portion 122a of the first traveling unit 121a also travels on the first rebar R12, similar to the third roller portion 122c of the third traveling unit 121c. In this manner, when the rebar binding robot 100 according to the embodiment of the present disclosure travels along the first rebar R10, the rebar binding robot 100 travels, for example, on a certain first rebar R10 (first rebar R12) and a first rebar R10 (first rebar R14) that is arranged two positions away from the certain first rebar R12, and binds the intersection point c12 of the first rebar R10 and the second rebar R20 that is located on a first rebar R13, which is a first rebar R10 that is present between the first rebar R12 and the first rebar R14 on which the rebar binding robot 100 travels.

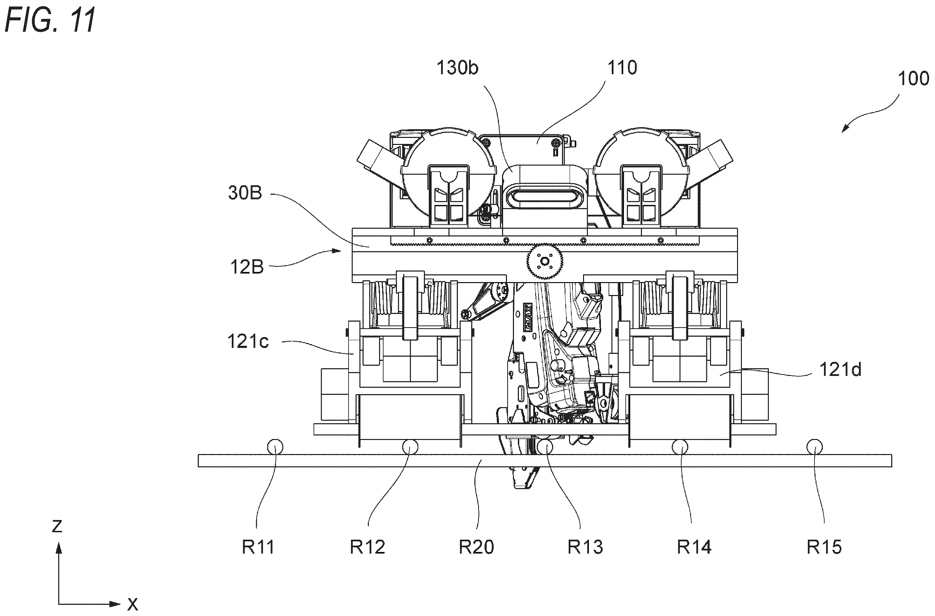

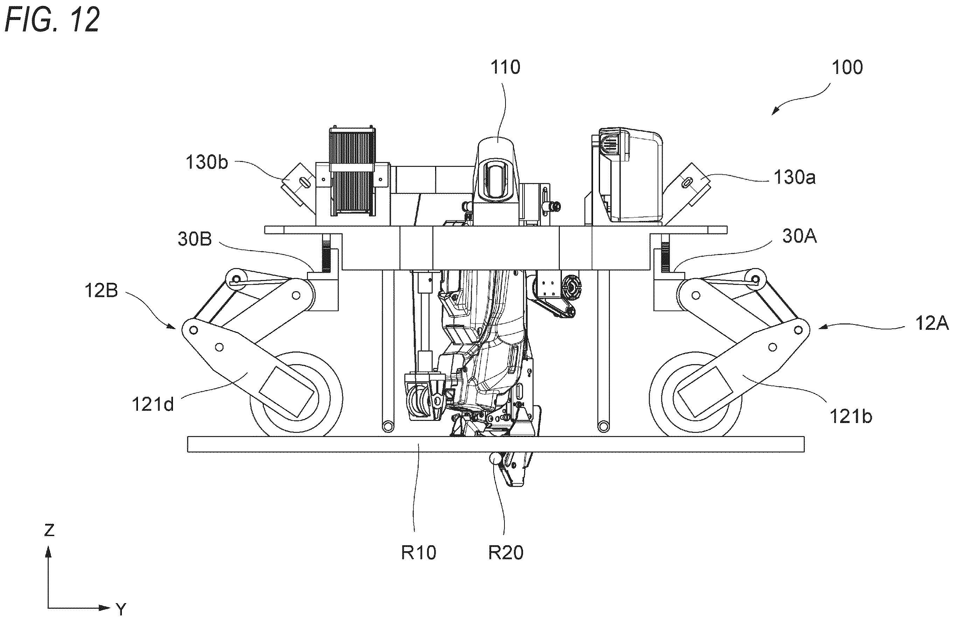

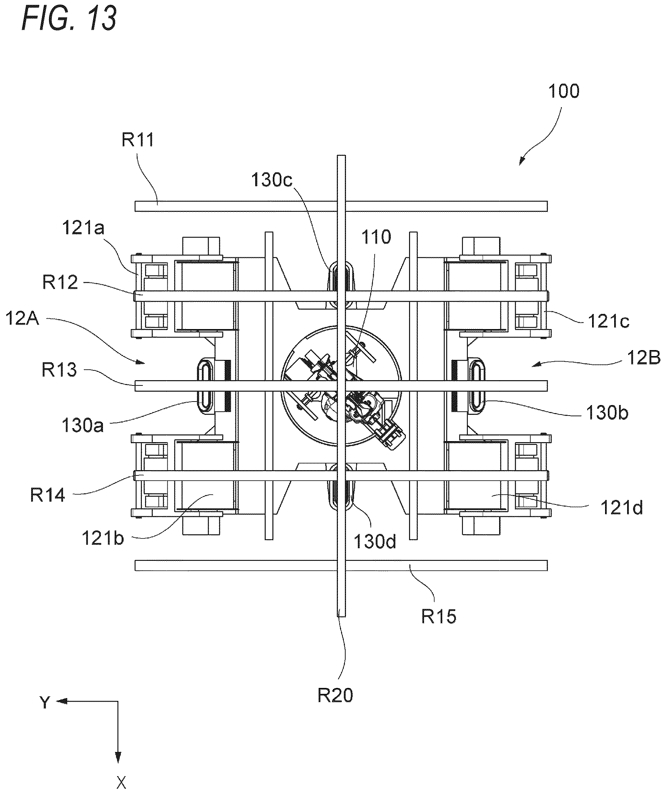

Next, the rebar binding robot 100 during rebar binding work will be described with reference to FIGS. 11, 12, and 13. FIG. 11 is a view of the rebar binding robot 100 that has stopped traveling and is performing binding work, as viewed from the Y direction (-Y direction). FIG. 12 is a view of the rebar binding robot 100 performing binding work, as viewed from the X direction (+X direction). FIG. 13 is a view of the rebar binding robot 100 performing binding work, as viewed from below in the Z direction (-Z direction). FIGS. 11, 12, and 13 illustrate an example in which the rebar binding robot 100 binds the intersection point c12 of the first rebar R13 and the second rebar R20. When performing the binding work, the rebar binding robot 100 stops traveling (FIG. 11) and lowers the rebar binding unit 110 to perform the binding operation (FIGS. 12 and 13).

Next, a configuration for calculating the position of the rebar group R (first rebar R10 and second rebar R20) by the rebar binding robot 100 according to the embodiment of the present disclosure will be described. The rebar binding robot 100 according to the embodiment of the present disclosure includes the traveling unit 121 configured to be capable of traveling on the rebar group R including a plurality of first rebars R1 of which the extension direction is the Y direction (first direction) and a plurality of second rebars R2 of which the extension direction is the X direction (second direction) intersecting with the Y direction (first direction) and that are arranged to intersect the first rebars R1, the sensor unit 130 configured to be capable of detecting at least one first rebar R10 and/or at least one second rebar R20, and the first rebar determination section 164al and/or the second rebar determination section 164a2 (also referred to as a "rebar position calculation unit" in the present embodiment) configured to calculate the position of the at least one first rebar R10 and/or at least one second rebar R20 detected by the sensor unit 130 based on pixel values of a plurality of pixels that form a two-dimensional image generated by the detection results of the sensor unit 130. The rebar binding robot 100 according to the embodiment of the present disclosure can streamline the process of calculating the positions of the first rebar R10 and/or the second rebar R20 by calculating the positions of the first rebar R10 and/or the second rebar R20 based on a two-dimensional image generated by the detection results of the sensor unit 130. For example, by performing calculations based on two-dimensional images as detection results of the sensor units, a calculation load can be reduced compared to when calculating the position of the rebar using three-dimensional data.

In the rebar binding robot 100 according to the embodiment of the present disclosure, the two-dimensional image used to calculate the position of the first rebar R10 and/or the second rebar R20 may be a grayscale image. In this case, the rebar binding robot 100 is provided with the memory device 198 for storing information of at least one template image including a partial image of the first rebar R10 and/or the second rebar R20, and the above-mentioned two-dimensional image includes a grayscale image, and the first rebar determination section 164a1 and/or the second rebar determination section 164a2 (rebar position calculation unit) may be configured to calculate the position of at least one first rebar R10 and/or at least one second rebar R20 by comparing the grayscale image with the template image.

In addition, in the rebar binding robot 100 according to the embodiment of the present disclosure, when an intensity value of a pixel is equal to or greater than a predetermined threshold in a grayscale image, it may be determined that the pixel corresponds to the first rebar R10 and/or the second rebar R20. In this case, the first rebar determination section 164a1 and/or the second rebar determination section 164a2 (rebar position calculation unit) may determine that at least a part of the first rebar R1 and/or at least a part of the second rebar R2 are present at a position corresponding to a pixel having an intensity value equal to or greater than a predetermined threshold when the intensity value of the pixel forming the grayscale image is equal to or greater than the predetermined threshold (first threshold). Alternatively, when using a grayscale image as the two-dimensional image, the grayscale image may be generated by lowering the image intensity in regions where objects are present and increasing the image intensity in regions where objects are not present. In this case, when the intensity value of a pixel is less than a predetermined threshold, it may be determined that the pixel corresponds to the first rebar R10 and/or the second rebar R20.

In the rebar binding robot 100 according to the embodiment of the present disclosure, the grayscale image may be generated by the detection results of the three-dimensional sensor. In this case, the sensor unit 130 includes a three-dimensional sensor capable of detecting the x-coordinates, y-coordinates, and z-coordinates of a plurality of points on a surface of a detection object, a z-coordinate value detected by the three-dimensional sensor is converted into an image intensity that differs depending on the magnitude of the z-coordinate value, and the grayscale image may be generated by constructing a two-dimensional image based on the x-coordinates, y-coordinates, and image intensity.

Alternatively, the rebar binding robot 100 according to the embodiment of the present disclosure may be configured such that the sensor unit 130 captures grayscale images. In this case, the sensor unit 130 may include an imaging device, and the grayscale image may be generated based on an image captured by the imaging device.

In addition, the rebar binding robot 100 according to the embodiment of the present disclosure may calculate the position of the first rebar R10 and/or the second rebar R20 based on the matching degree. In this case, the first rebar determination section 164al and/or the second rebar determination section 164a2 (rebar position calculation unit) may be configured to calculate a position of at least one first rebar R10 and/or at least one second rebar R20 based on the matching degree between the grayscale image and the template image.

In the embodiment of the present disclosure, the matching degree may be calculated, for example, by comparing the detection results by the sensor unit 130 with a two-dimensional image generated based on the detection results by the sensor unit 130, or with a template image. For example, the pixel values of all pixels in a partial image to be compared in the two-dimensional image generated based on the detection results by the sensor unit 130 may be compared with the pixel values of all pixels in a template image, and the matching degree may be calculated by expressing the proportion of matching pixels as a percentage based on whether the pixel values of each corresponding pixel in the two images to be compared match. For example, when a template image contains 50,000 pixels and is compared with 50,000 pixels in a comparison grayscale image, and the intensity of 40,000 pixels matches or substantially matches (for example, the difference between the two is within 10%), the matching degree may be calculated to be 80%.

In this case, the position of the first rebar R10 and/or the second rebar R20 may be calculated using a reference value of the matching degree. In this case, the first rebar determination section 164al and/or the second rebar determination section 164a2 (rebar position calculation unit) may determine whether the matching degree is equal to or greater than a predetermined reference value, and when the matching degree is equal to or greater than the predetermined reference value, may determine that the first rebar R10 and/or the second rebar R20 are present within a detection range of the sensor unit 130.

In the rebar binding robot 100 according to the embodiment of the present disclosure, a different value may be set for each height as the reference value of the matching degree. In this case, the rebar binding robot 100 according to the embodiment of the present disclosure includes the robot height calculation section 164e (also referred to as a "robot height calculation unit" in the present embodiment) that calculates the height of the rebar binding robot 100 from the rebar group R, the predetermined reference value includes a plurality of reference values corresponding to different heights of the rebar binding robot 100, and the first rebar determination section 164a1 and/or the second rebar determination section 164a2 (rebar position calculation unit) may be configured to determine whether a reference value corresponding to the height of the rebar binding robot 100 from the rebar group R calculated by the robot height calculation section 164e (robot height calculation unit) is present among the plurality of reference values. Then, when it is determined that a reference value corresponding to the height of the rebar binding robot 100 is present among the plurality of reference values, the rebar binding robot 100 may calculate the position of the first rebar R10 and/or the second rebar R20 based on this reference value. On the other hand, when it is determined that a reference value corresponding to the height of the rebar binding robot 100 is not present among the plurality of reference values, the rebar binding robot 100 may calculate a new reference value corresponding to the measured height of the rebar binding robot 100 based on at least two of the plurality of reference values.

In the embodiment of the present disclosure, for example, a plurality of reference values may be set for the height of the rebar binding robot 100 from the rebar group R for each predetermined height. For example, five reference values may be set for the height of the rebar binding robot 100 from the rebar group R, starting from 10 cm and ending at 30 cm in increments of 5 cm. In this case, for example, when the robot height calculation section 164e determines that the height of the rebar binding robot 100 from the rebar group R is 20 cm, and the reference value for the height of 20 cm is set to 60%, then 60% may be used as the reference value. Also, for example, when the robot height calculation section 164e determines that the height of the rebar binding robot 100 from the rebar group R is 23 cm, and no reference value for 23 cm has been set, a new reference value may be set based on, for example, a reference value of 20 cm and a reference value of 25 cm. For example, when the reference value for the height of 20 cm is 60% and the reference value for the height of 25 cm is 50%, the reference value at 23 cm may be calculated by linear interpolation as 50% + (((60% - 50%) * ((25 cm - 23 cm) / (25 cm - 20 cm))) = 54%. The newly calculated reference value may be stored in the memory device 198, for example, and may be used in subsequent work as necessary. The above height, reference value, and method for calculating the new reference value are merely examples, and are not limited thereto. For example, more reference values may be set, and reference values may be set for heights less than 10 cm or greater than 30 cm, for example.

A process of calculating a position of a rebar by the rebar binding robot according to the embodiment of the present disclosure will be described below.

First, a specific example of the sensor unit 130 used in the rebar binding robot 100 will be described in detail. As the sensor unit 130, for example, a 3D distance camera such as a time of flight (ToF) camera (for example, TOF cam-635 manufactured by ESPROS Photonics Corporation) can be used. A 3D distance camera, for example, can output images in which the shading varies depending on the distance of each imaging target object from the camera, and the distance to the imaging target object can be acquired for each pixel, with relatively closer objects being represented with higher intensity (closer to black) and relatively more distant objects being represented with lower intensity (closer to white). In the embodiment of the present disclosure, while the rebar binding robot 100 is traveling on the rebar group R, the distance between the rebar binding robot 100 and the rebar group R does not change significantly, and thus rebars may be detected by recognizing relatively dark objects as rebars (first rebar R10 and/or second rebar R20).

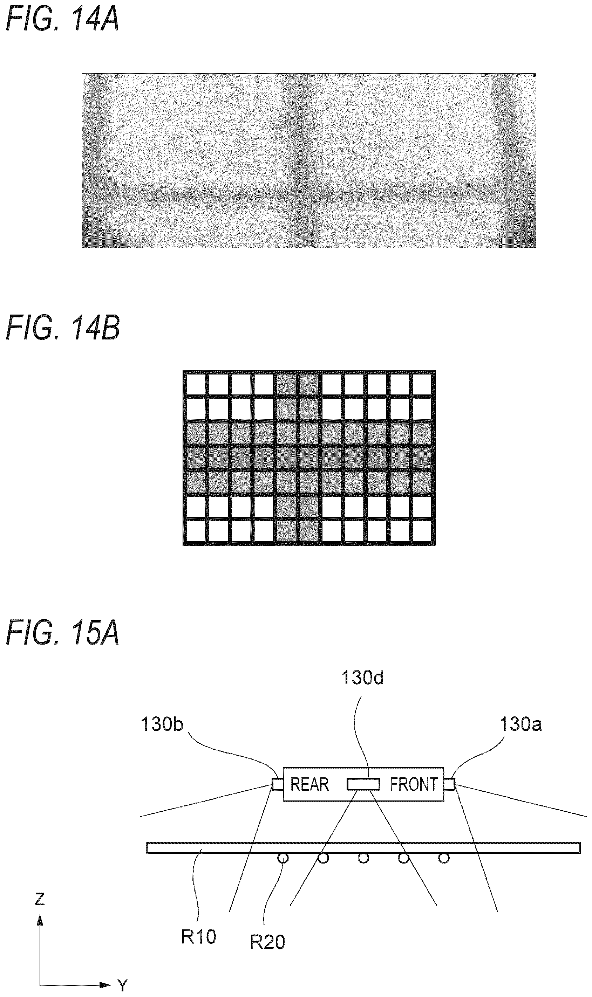

FIGS. 14A and 14B illustrate the images output by the 3D distance camera. FIG. 14A illustrates an image of the vicinity of the intersection point of the first rebar R10 and a second rebar R20, taken by the 3D distance camera. FIG. 14B schematically illustrates an image of the vicinity of the intersection point of the first rebar R10 and the second rebar R20. As illustrated in FIG. 14A, the image captured by the 3D distance camera shows shading, and in the embodiment of the present disclosure, the parts having high intensity can be recognized as the first rebar R10 and/or the second rebar R20. As illustrated in FIG. 14B, an image in which the shading of intensity varies from pixel to pixel is acquired.

The sensor unit 130 is not limited to the imaging device such as a camera exemplified above, and other sensors may be used. For example, a laser capable of acquiring information in the depth direction or the height direction may be used. For example, a two-dimensional image using image intensity similar to that described above may be generated based on depth direction information acquired by a laser.

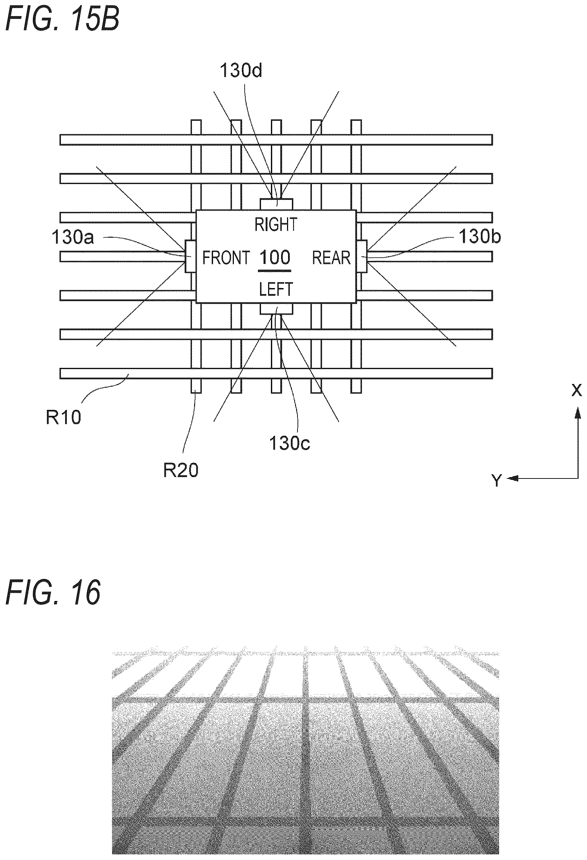

Next, a process of detecting rebars based on an image (a grayscale image in the present embodiment) captured and acquired by the sensor unit 130 will be described. First, the arrangement of the first sensor 130a, the second sensor 130b, the third sensor 130c, and the fourth sensor 130d of the sensor 130 will be described with reference to FIGS. 15A and 15B. FIGS. 15A and 15B are diagrams that schematically illustrate the arrangement of the first sensor 130a, the second sensor 130b, the third sensor 130c, and the fourth sensor 130d. FIG. 15A is a schematic side view of the rebar binding robot 100, as viewed from the horizontal direction (X direction). FIG. 15B is a schematic top view of the rebar binding robot 100, as viewed from above (above in the Z direction). FIG. 15A illustrates the first sensor 130a, the second sensor 130b, and the third sensor 130c, and also schematically illustrates imaging ranges of the first sensor 130a, the second sensor 130b, and the third sensor 130c.

As illustrated schematically in FIGS. 15A and 15B, the first sensor 130a and the second sensor 130b, which are arranged to be spaced apart from each other in the Y direction, are arranged to capture images obliquely downward. The third sensor 130c and the fourth sensor 130d (not illustrated) are similarly arranged to capture images obliquely downward. The first sensor 130a and the second sensor 130b are set, for example, such that an angle of view that defines the imaging range is, for example, 80° or more and 100° or less. Further, the third sensor 130c and the fourth sensor 130d are set such that the angle of view is, for example, 50° or more and 70° or less. Any of the sensors 130 may be set to have other angles of view. As described above, when determining whether a foreign object is present based on the detection results of the first sensor 130a, the second sensor 130b, the third sensor 130c, and/or the fourth sensor 130d, the imaging range of each sensor may be changed, for example, by pointing the sensor at an upward angle.

FIG. 16 schematically illustrates an image captured by the first sensor 130a. As illustrated in FIG. 16, in the embodiment of the present disclosure, the first sensor 130a is arranged to capture an image in a diagonally downward direction, and thus the distance between adjacent first rebars R10 becomes narrower from the near to the far. In the embodiment of the present disclosure, the position of each rebar (the plurality of first rebars R10 and the plurality of second rebars R20) that forms the rebar group R can be detected based on the image obtained as described above, for example by performing template matching. In the embodiment of the present disclosure, by using template matching, for example, rebars (first rebar R10 and/or second rebar R20) are detected based on the similarity (also referred to as the "matching degree" in the present embodiment) between a captured image and a previously prepared image, a grayscale image including shading parts corresponding to the rebars is prepared as a template, the images captured by each sensor unit 130 are scanned, and the similarity in a scanning direction is calculated.

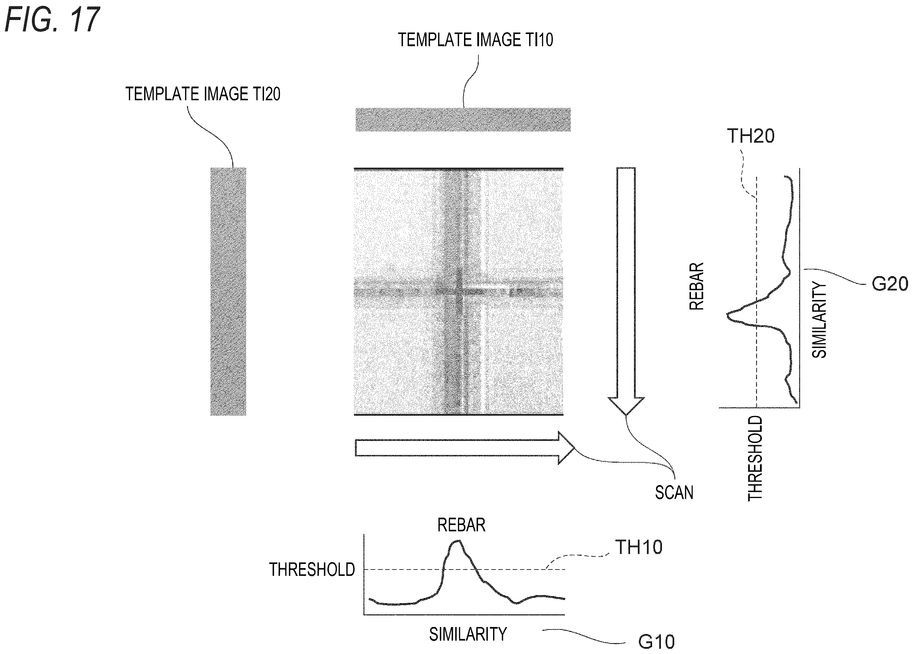

With reference to FIG. 17, template matching performed in the embodiment of the present disclosure will be described. FIG. 17 is a schematic view for illustrating template matching according to the present embodiment. FIG. 17 illustrates a captured image of the vicinity of the intersection point c12 of the first rebar R10 and the second rebar R20, as well as template images T110 and T120 for scanning in the X direction and the Y direction. FIG. 17 also illustrates the template images TI10 and TI20, and schematic graphs G10 and G20 of the similarities calculated in response to the respective scans. The template images T110 and TI20 are scanned in the Y direction and the X direction, respectively, and the similarities with the template images TI10 and TI20 are calculated. Then, locations on the captured image where a maximum value of the calculated similarities exceeds a threshold are determined to correspond to positions where rebars are present. As illustrated in graphs G10 and G20, in the distribution of similarities along the Y direction and the X direction, the parts exceeding threshold TH10 and threshold TH20 are confirmed, and these correspond to positions where rebars are present. The similarity (matching degree) may be calculated, for example, by comparing the color intensity of each pixel in the captured image with the color intensity of each pixel forming the template image. For example, first, a distance to an object for each pixel in the captured image is extracted as a color intensity. Next, when the total or average color intensity of the entire captured image is light (for example, lower than a predetermined threshold), it is determined that there are no rebars in the captured image. On the other hand, when the color intensity is high (for example, higher than a predetermined threshold), a difference between the extracted color intensity and the color intensity of each pixel forming the template image is compared for each pixel. A position of the captured image pixel where the sum of absolute values of the differences between the color intensities of the captured pixels and the pixels forming the template image is the lowest may be extracted as a rebar position. In this manner, the first rebar R10 and the second rebar R20 can be detected by template matching based on the similarity calculated by scanning the template image against the captured image.

As described above with reference to FIG. 16, in the embodiment of the present disclosure, in the image captured by the first sensor 130a, the distance between the first rebars R10 adjacent to each other in the X direction changes along the Y direction. Similarly, also in the image captured by the second sensor 130b, the distance in the X direction between the first rebars R10 changes in the Y direction, and in the images captured by the third sensor 130c and the fourth sensor 130d, the distance in the Y direction between the captured second rebars R20 changes along the X direction. Therefore, for example, the captured image may be corrected by performing orthogonal transformation, and accordingly, the distances between rebars in the captured image become approximately equal, and then template matching may be performed. It is also possible to detect rebars based on template matching by preparing an image in which the distance between rebars changes as illustrated in FIG. 16 as a template without performing image transformation such as orthogonal transformation.

In template matching for the embodiment of the present disclosure, for example, frequency analysis may be performed on each image, and the phase correlation method may be used to evaluate the association between the captured image and the template image.

The positions of the first rebar R10 and the second rebar R20 can also be estimated by, for example, using a three-dimensional sensor to acquire three-dimensional XYZ data of an object within the detection range. As described above, in the rebar binding robot 100 according to the embodiment of the present disclosure, by performing template matching in which the third-dimensional data in the Z direction is treated as pixel intensity information, an amount of calculation required to calculate the position of the intersection point c12 can be made relatively small compared to the case where calculations are performed based on, for example, three-dimensional XYZ data. When performing binding work at the intersection point c12 while traveling, as with the rebar binding robot 100 according to the embodiment of the present disclosure, a method for determining the position of the rebar using template matching, which can reduce the amount of calculations, is preferably used.

Next, a method for determining the intersection point of the first rebar R10 and the second rebar R20 in the embodiment of the present disclosure will be described. In the embodiment of the present disclosure, when the rebar binding robot 100 determines the intersection point c12 of the first rebar R10 and the second rebar R20, the first sensor 130a and the second sensor 130b may be configured to detect the first rebar R10, as described above. That is, as described above, the rebar binding robot 100 includes the rebar binding unit 110 configured to bind the intersection point c12 of the first rebar R10 and the second rebar R20 of the rebar group R, the sensor unit 130 includes the first sensor 130a and the second sensor 130b that are arranged to be spaced apart from each other along the third direction and are configured to be able to detect at least the first rebar R10, and the at least one template image described above includes the template image T110 (first template image) that includes a partial image of the first rebar R10. Further, in the rebar binding robot 100, the traveling unit 121 advances in the Y direction (first direction), and is arranged such that the direction (third direction) in which the first sensor 130a and the second sensor 130b are arranged is parallel to the Y direction (first direction). Also, the first rebar determination section 164al and/or the second rebar determination section 164a2 (rebar position calculation unit) calculates the position of the first rebar R10 by comparing the detection results of the first sensor 130a and/or the second sensor 130b with the first template image, and the rebar binding unit 110 may bind the intersection point c12 on the first rebar R10 of which the position has been calculated.

In addition, in this case, the rebar binding robot 100 may be further configured such that the third sensor 130c and the fourth sensor 130d detect the second rebar R20 in addition to the first rebar R10 and estimate the intersection point c12. That is, the rebar binding robot 100 may further include the intersection point calculation section 166 (also referred to as an "intersection point estimation unit" in the present embodiment) that estimates the intersection point c12, the sensor unit 130 may include the third sensor 130c and the fourth sensor 130d that are arranged spaced apart from each other along the fourth direction that intersects with the third direction and are configured to be able to detect at least the second rebar R20, and at least one template image may include the template image TI20 (second template image) that includes a partial image of the second rebar R20. Further, the rebar binding robot 100 may be arranged such that the fourth direction is parallel to the X direction (second direction). Also, the first rebar determination section 164a1 and/or the second rebar determination section 164a2 (rebar position calculation unit) may calculate the position of the second rebar R20 by comparing the detection results of the third sensor 130c and/or the fourth sensor 130d with the second template image. The intersection point estimation section (intersection point estimation unit) may estimate an intersection point between the calculated first rebar R10 and the calculated second rebar R20 as the intersection point c12, and the rebar binding unit 110 may bind the estimated intersection point c12.

In addition, when the rebar binding robot 100 detects the end R10e of the first rebar R10, it may cause the third sensor 130c and/or the fourth sensor 130d to detect the first rebar R10, and the first rebar R10 detected by the third sensor 130c and/or the fourth sensor 130d may be used to calculate the lateral movement amount of the rebar binding robot 100. That is, when the traveling unit 121 moves from the first rebar R10 on which the traveling unit 121 advances to another first rebar R10, the rebar binding robot 100 may include the movement amount calculation section 174 (movement amount calculation unit) that calculates the movement amount of the traveling unit 121 based on position information of the first rebar R10 calculated by the first rebar determination section 164a1 and/or the second rebar determination section 164a2 (rebar position calculation unit). The first rebar determination section 164al and/or the second rebar determination section 164a2 (rebar position calculation unit) may calculate the position of the first rebar R10 on which the traveling unit 121 advances based on the detection results of the first sensor 130a and/or the second sensor 130b. Then, when the matching degree of the detection results of the first sensor 130a is less than a predetermined reference value, it may be determined whether the matching degree is equal to or greater than a predetermined end reference value, and when it is determined that the matching degree is equal to or greater than the predetermined end reference value, it may be determined that the end R10e of the first rebar R10 is present within the detection range of the first sensor 130a. Then, when it is determined that the end R10e of the first rebar R10 is present within the detection range of the first sensor 130a, the third sensor 130c and/or the fourth sensor 130d may be set to detect the first rebar R10. Further, the first rebar determination section 164a1 and/or the second rebar determination section 164a2 (rebar position calculation unit) may calculate the position of another first rebar R10 that is spaced apart in the X direction (second direction) from the first rebar R10 on which the traveling unit 121 advances, based on the detection results of the third sensor 130c and/or the fourth sensor 130d. Then, the movement amount calculation section 174 (movement amount calculation unit) may calculate the movement amount of the traveling unit 121 in the X direction (second direction) based on the position of the other first rebar R10 calculated by the first rebar determination section 164a1 and/or the second rebar determination section 164a2 (rebar position calculation unit) and the position of the first rebar R10 on which the traveling unit 121 advances, and the traveling unit 121 may move in the X direction (second direction) based on the calculated movement amount in the X direction (second direction).

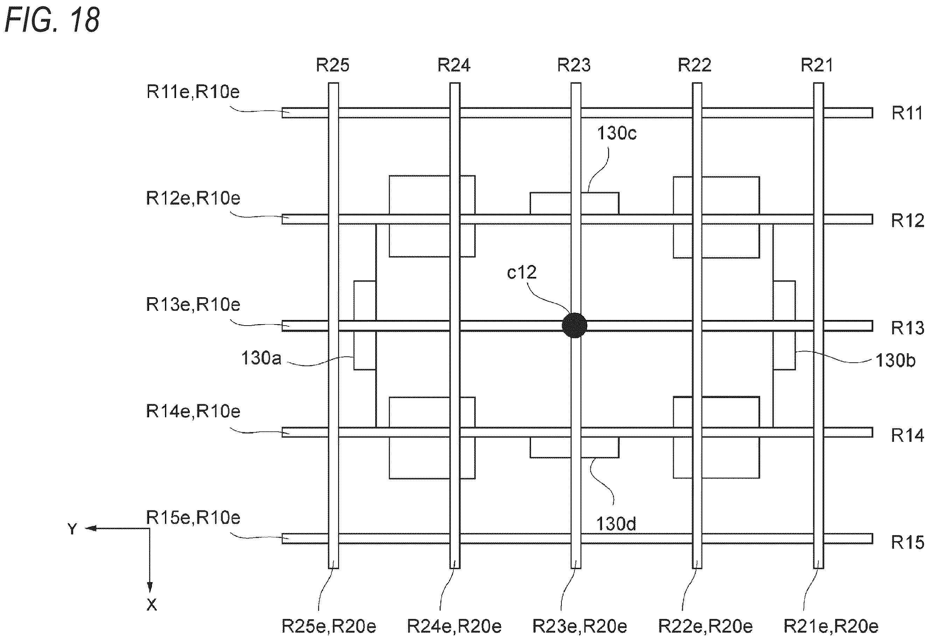

With reference to FIG. 18, a method for estimating the intersection point of the first rebar R10 and the second rebar R20 will be described. FIG. 18 is a view schematically illustrating the rebar binding robot 100, as viewed from below in the Z direction (-Z direction), for illustrating the method for estimating the intersection point. As illustrated in FIG. 18, for example, in the embodiment of the present disclosure, the rebar binding robot 100 is configured to travel on two first rebars R12 and R14, as described above, with the first sensor 130a and the second sensor 130b detecting the first rebar R13, and the third sensor 130c and the fourth sensor 130d detecting the second rebar R20. In the example illustrated in FIG. 18, the third sensor 130c and the fourth sensor 130d detect, for example, a second rebar R23. In this case, based on the detection results of the first sensor 130a and the second sensor 130b, the first rebar R13 extending between the first sensor 130a and the second sensor 130b is estimated, and based on the detection results of the third sensor 130c and the fourth sensor 130d, the second rebar R23 extending between the third sensor 130c and the fourth sensor 130d is estimated. A point where the estimated first rebar R13 extending between the first sensor 130a and the second sensor 130b intersects the second rebar R23 extending between the third sensor 130c and the fourth sensor 130d is estimated to be the intersection point c12.

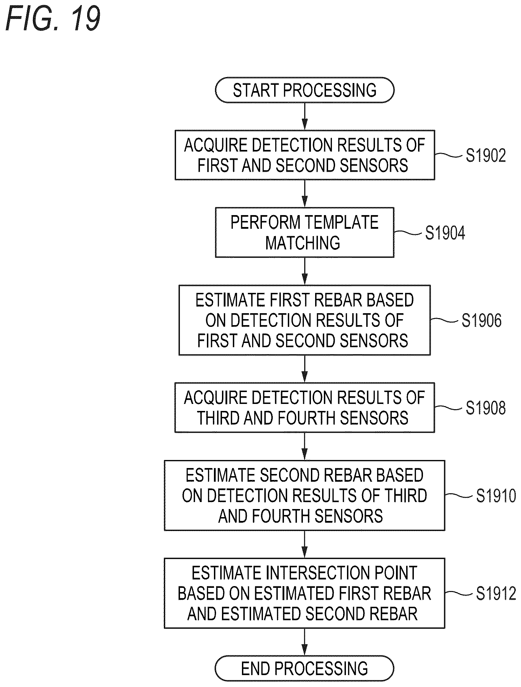

A method for estimating the intersection point c12 in the embodiment of the present disclosure will be described with reference to FIG. 19. FIG. 19 is a flowchart of the method for estimating the intersection point c12 in the embodiment of the present disclosure. This process is performed, for example, in step S1710 described above.

First, the detection results of the first sensor 130a and the second sensor 130b are acquired (S1902).

Next, based on the detection results of the first sensor 130a and the second sensor 130b, template matching is performed to confirm the first rebar R10 and/or the second rebar R20 detected by the first sensor 130a and the second sensor 130b (S1904).

The position of the first rebar R13 is estimated based on the detection results of the first sensor 130a and the second sensor 130b (S1906).

Next, the detection results of the third sensor 130c and the fourth sensor 130d are acquired (S1908).

Next, the position of the second rebar R20 is estimated based on the detection results of the third sensor 130c and the fourth sensor 130d (S1910).

Next, the intersection point is estimated based on the estimated position of the first rebar R13 and the estimated position of the second rebar R20 (S1912).

In this manner, the rebar binding robot 100 according to the embodiment of the present disclosure may be arranged on the rebar group R such that the third direction (Y direction) in which the first sensor 130a and the second sensor 130b are arranged is parallel to the first direction in which the first rebar R10 extends, and the fourth direction, which is the direction in which the third sensor 130c and the fourth sensor 130d are arranged, is parallel to the second direction, which is the direction in which the second rebar R20 extends, and may include the intersection point calculation section 166 which is an intersection point estimation section that estimates the intersection point c12, and the first sensor 130a and the second sensor 130b may be configured to be capable of detecting the first rebar R10. The third sensor 130c and the fourth sensor 130d may be configured to be capable of detecting the second rebar R20. Also, the intersection point calculation section 166, which is the intersection point estimation section, may be configured to estimate the position of the first rebar R10 (first rebar R13) detected by both the first sensor 130a and the second sensor 130b based on the detection results of the first sensor 130a and the second sensor 130b, to estimate the position of the second rebar R20 (second rebar R23) detected by both the third sensor 130c and the fourth sensor 130d based on the detection results of the third sensor 130c and the fourth sensor 130d, and to estimate an intersection point between the first rebar R13 detected by the first sensor 130a and the second sensor 130b and the second rebar R23 detected by the third sensor 130c and the fourth sensor 130d as the intersection point c12.

When the rebar binding robot 100 calculates the position of the intersection point c12 of the first rebar R10 and the second rebar R20 on the first rebar R13, for example, the first sensor 130a may have passed through the point (intersection portion cp12) of intersection. In this case, for example, the calculated position of the intersection point c12 may be adjusted based on information about the intersection portion cp12 captured by the first sensor 130a. That is, the rebar binding robot 100 may be configured such that the first sensor 130a and the second sensor 130b advance in the first direction (Y direction) while detecting the first rebar R10, and when the first sensor 130a detects the intersection portion cp12 where the first rebar R10 intersects the second rebar R20 while the rebar binding robot 100 is advancing, it may be configured to determine whether the intersection portion cp12 matches the estimated intersection point c12, and when the intersection portion cp12 does not match the estimated intersection point c12, it may be configured to adjust the position of the estimated intersection point c12. When the position of the detected intersection portion cp12 does not match the position of the estimated intersection point c12, the position of the rebar binding robot 100 may be adjusted, for example, by accelerating or decelerating the first traveling unit 121a, the second traveling unit 121b, the third traveling unit 121c, and/or the fourth traveling unit 121d of the traveling unit 121, respectively, in a manner similar to that described above regarding the method of making the rebar binding robot 100 follow the first rebar R10, or by controlling the rotation speeds of the first wheel drive motor 124a, the second wheel drive motor 124b, the third wheel drive motor 124c, and the fourth wheel drive motor 124d.

The method for estimating the intersection point described above with reference to FIG. 19 is merely an example, and is not limited to the above example. For example, the acquisition of detection results by each sensor does not have to be performed in the above order, and the estimation of the positions of the rebars based on the detection results does not have to be performed in the above order.

Next, a movement amount calculation method of the rebar binding robot 100 in the embodiment of the present disclosure will be described. Referring to FIG. 18, an example will be described in which the rebar binding robot 100 reaches the vicinity of the end R10e in the Y direction of the first rebar R10 and performs the lateral movement (movement in the X direction). As illustrated in FIG. 18, the rebar binding robot 100 travels over the first rebar R12 and the first rebar R14, and binds the points where the first rebar R13 which is present between the first rebar R12 and the first rebar R14 intersects the second rebars R20 (for example, second rebars R21, R22, R23, R24, and R25), reaching the vicinity of the end R12e, the end R13e, and the end R14e. In this case, the rebar binding robot 100 will next perform the binding work on the first rebar R14, which is the rebar adjacent to the first rebar R13 in the X direction (+X direction) on which the rebar binding robot 100 has performed the binding work, and therefore moves in the X direction (+X direction, a direction from the first rebar R13 to the first rebar R14).

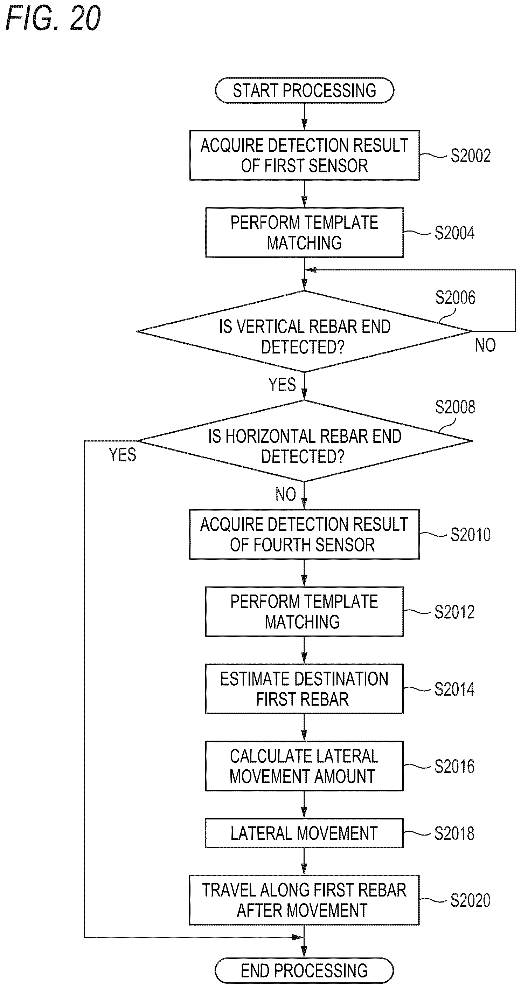

A method of lateral movement of the rebar binding robot 100 in this case will be described with reference to FIG. 20. FIG. 20 is a flowchart regarding the lateral movement of the rebar binding robot 100.

First, the detection result of the first sensor 130a is acquired (S2002).

Next, template matching is performed on the detection results of the first sensor 130a (S2004).

Next, based on the result of template matching, it is determined whether the end R13e of the first rebar R13 detected by the first sensor 130a is detected (S2006).

Next, it is determined whether the end R20e of the second rebar R20 is detected (S2008). As the end R20e of the second rebar R20, for example, as illustrated in FIG. 18, it may be determined whether any of the ends R21e, R22e, R23e, R24e, and R25e of the second rebars R21, R22, R23, R24, and R25 is detected.

For example, it may be determined whether the end R20e of the second rebar R20 is detected based on the detection results of the third sensor 130c and/or the fourth sensor 130d. In the embodiment of the present disclosure, the rebar binding robot 100 performs binding work at the intersection point of the first rebar R10 and the second rebar R20 from the first rebar R10 on the left side on the X axis to the first rebar R10 on the right side on the X axis, as viewed from above in the Z direction. Therefore, it may be determined whether the end R20e of the second rebar R20 on the right side in the X direction is detected based on the detection results of the fourth sensor 130d provided on the right side in the X direction, as viewed from above in the Z direction. For example, when the fourth sensor 130d detects the end R20e of the second rebar R20 on the right side in the X direction, there is a possibility that the binding work of the last first rebar R10 is completed, and thus the binding work of the rebar group R that is a work target may be ended.

The detection of the end R20e is not limited thereto and may be determined, for example, based on the detection results of other sensors. When binding work is performed from the first rebar R10 on the right side in the X direction to the first rebar R10 on the left side in the X direction, the end R20e of the second rebar R20 on the left side in the X direction may be detected by the third sensor 130c. It is also possible to configure the binding work to be ended based on a condition other than the detection of the end R20e. For example, it is also possible to configure the rebar binding robot 100 to move by setting conditions to start binding work on another rebar at a location other than the end R20e, or to change the binding position when a factor such as a foreign object is detected, and to move the rebar binding robot 100 to a different rebar for which binding work is to be performed. In addition, it is also possible for the first sensor 130a and/or the second sensor 130b to detect the second rebar R20 by adjusting, for example, the arrangement location, inclination, angle of view, or the like, and thus the detection of the end R20e of the second rebar R20 may be performed using the detection results of the first sensor 130a and/or the second sensor 130b.

Next, the detection result of the fourth sensor 130d is acquired (S2010).

Next, template matching is performed based on the detection results of the fourth sensor 130d (S2012).

Next, based on the position of the first rebar R10 detected by the fourth sensor 130d, the first rebar R10, which is at the movement destination, in the rebar binding robot 100 is estimated (S2014). In the embodiment of the present disclosure, the fourth sensor 130d detects a plurality of first rebars R10. For example, in the example illustrated in FIG. 18, the fourth sensor 130d may detect the first rebar R14 which is present on the right side in the X direction of the rebar binding robot 100. In addition, since the binding work has been performed at the intersection points c12 of the first rebar R10 and the second rebars R20 along the first rebar R13, when next performing the binding work at the intersection points along the first rebar R14, the rebar binding robot 100 performs the lateral movement, for example, to travel over the first rebar R13 and the first rebar R15. For example, the lateral movement may be performed to move the rebar binding robot 100 in the X direction such that the first traveling unit 121a and the third traveling unit 121c travel on the first rebar R13, and the second traveling unit 121b and the fourth traveling unit 121d travel on the first rebar R15.

Next, the lateral movement amount is calculated (S2016). The lateral movement amount of the rebar binding robot 100 may be calculated by the following method. For example, as described above, when the rebar binding robot 100 moves to the right in the X direction (+X direction) as viewed from above in the Z direction, that is, when the rebar binding robot 100 moves in the direction in which the fourth sensor 130d is arranged, the lateral movement amount of the rebar binding robot 100 may be calculated based on two pieces of information: how far the fourth sensor 130d is in the X direction from the center in the X direction of the rebar binding robot 100; and how far the first rebar R14 detected by the fourth sensor 130d is from the fourth sensor 130d.

When calculating how far the fourth sensor 130d is from the center in the X direction of the rebar binding robot 100 in the X direction, the center in the X direction of the rebar binding robot 100 may be, for example, a position where the rebar binding unit 110 is arranged. Alternatively, the binding position of the rebar binding unit 110 may be regarded as the center in the X direction of the rebar binding robot 100. In this case, for example, the position in the X direction of the first rebar R13, which is a target of the rebar binding robot 100 performing the binding work, may be determined to be the center position in the X direction of the rebar binding robot 100. In addition, the center position in the X direction of the rebar binding robot 100 and the distance (distance in the X direction) of the fourth sensor 130d from the center position in the X direction of the rebar binding robot 100 may be calculated in advance and stored in the memory device 198. In addition, in a configuration in which the position of the sensor unit 130 can be changed, for example, when the position of the fourth sensor 130d is changed depending on a construction site or the like, the direction and amount in which the fourth sensor 130d has been moved can be calculated, and the distance in the X direction of the fourth sensor 130d from the center in the X direction of the rebar binding robot 100 can be calculated taking into account the movement amount of the fourth sensor 130d. Furthermore, the distance between the fourth sensor 130d and the first rebar R14 detected by the fourth sensor 130d may be calculated, for example, based on an image captured by the fourth sensor 130d.

For example, when the fourth sensor 130d is attached at a position 100 away in the X direction from the center (for example, the position of the first rebar R13) in the X direction of the rebar binding robot 100, and the first rebar R14 is at a position 20 away from the fourth sensor 130d in the direction away from the center in the X direction of the rebar binding robot 100, the interval (the interval between the first rebar R13 and the first rebar R14) of the first rebar R10 may be calculated to be 121, and control may be performed to set the lateral movement amount to 121. For example, when the fourth sensor 130d is attached at a position 20 cm away in the X direction from the center (for example, the position of the first rebar R13) in the X direction of the rebar binding robot 100, and the first rebar R14 is positioned 4 cm away from the fourth sensor 130d in the direction away from the center in the X direction of the rebar binding robot 100, the interval (the interval between the first rebar R13 and the first rebar R14) of the first rebar R10 may be calculated to be 24 cm, and control may be performed to set the lateral movement amount to 24 cm. In addition, when the fourth sensor 130d is attached at a position 20 cm away in the X direction from the center (for example, the position of the first rebar R13) in the X direction of the rebar binding robot 100, and the first rebar R14 is positioned 4 cm closer to the center in the X direction of the rebar binding robot 100 from the fourth sensor 130d, the interval (the interval between the first rebar R13 and the first rebar R14) of the first rebar R10 may be calculated to be 16 cm, and control may be performed to set the lateral movement amount to 16 cm.

The lateral movement amount of the rebar binding robot 100 may be calculated such that, for example, as described above, when the rebar binding robot 100 performs the lateral movement next to bind the intersection points on the first rebar R14, the rebar binding robot 100 performs the lateral movement by the lateral movement amount that is equivalent to the overall interval between adjacent first rebars R10. In the above-described example, the first traveling unit 121a and the third traveling unit 121c move from the first rebar R12 to the first rebar R13, and the second traveling unit 121b and the fourth traveling unit 121d move from the first rebar R14 to the first rebar R15. In the embodiment of the present disclosure, the first rebars R10 are arranged at substantially equal intervals and substantially parallel to one another, and thus the movement amounts in the X direction of the first traveling unit 121a to the fourth traveling unit 121d are the same. Therefore, the lateral movement amount may be, for example, the interval in the X direction between the first rebar R14 and the first rebar R15 detected by the fourth sensor 130d. Alternatively, since the interval between the first rebars R10 is substantially equal, the lateral movement amount may be calculated based on the interval between adjacent first rebars R10 calculated based on the detection results from another sensor. In addition, the distances in the X direction between the plurality of (for example, three or more) first rebars R10 may be calculated, an average value of the calculated distances in the X direction between the plurality of first rebars R10 may be calculated, and the average value of the interval between the first rebars R10 may be used as the lateral movement amount. By calculating the average value, even when there is an error in the interval between the first rebars R10, the effect of the error on the calculated lateral movement amount can be reduced.

Next, the rebar binding robot 100 performs the lateral movement based on the calculated lateral movement amount (S2018).

After completing the lateral movement, the rebar binding robot 100 may, for example, travel along the first rebar R13 and the first rebar R15 where the first traveling unit 121a to the fourth traveling unit 121d are positioned after the movement (S2020), and start binding work at the intersection points c12 on the first rebar R14.

The detection of the end R10e of the first rebar R10 described above may be performed, for example, by preparing a template corresponding to an image of the end R10e and determining the matching degree of the end R10e with the template. For example, when preparing a template image extended in one direction for a part other than the end R10e as illustrated with reference to FIG. 17, a template image may be prepared for the end R10e in which the length in the Y direction of a part corresponding to the rebar is shorter than that of the part other than the end R10e.

Alternatively, it may be determined that the end R10e is being reached when the matching degree is within a certain range of values. For example, at the part other than the end R10e of the first rebar R10, when the matching degree is relatively close to 100%, for example, 75% or more, the presence of part other than the end R10e of the first rebar R10 can be determined, and when the matching degree is relatively low, for example, 50% or more and 75% or less, it can be determined that the rebar binding robot 100 is traveling at a part close to the end R10e in the first rebar R10. The matching degree here for the part other than the end R10e and for the vicinity of the end R10e is merely an example, and other values may be set, or a reference value may be configured to be changeable depending on the arrangement of the rebars and other environments, or the like.

In this manner, when the rebar binding robot 100 performs the lateral movement, the detection results of the first rebar R10 by the third sensor 130c and/or the fourth sensor 130d are particularly used. As for the third sensor 130c and the fourth sensor 130d, as described above, for example, when calculating the position of the intersection point c12 of the first rebar R10 and the second rebar R20, the detection results of the position of the second rebar R20 by the third sensor 130c and the fourth sensor 130d are used. In other words, when calculating the position of the intersection point c12 of the first rebar R10 and the second rebar R20, the detection results of the position of the first rebar R10 by the third sensor 130c and the fourth sensor 130d do not need to be used, and in this case, the first rebar R10 does not need to be detected by the third sensor 130c and the fourth sensor 130d. When the rebar binding robot 100 progresses with the rebar binding work and reaches the end R10e of the first rebar R10, for example, the rebar binding robot 100 performs the lateral movement, and therefore, an imaging range of the third sensor 130c and/or the fourth sensor 130d may be changed, for example, by changing the orientation of the third sensor 130c and/or the fourth sensor 130d such that the first rebar R10 can be detected by the third sensor 130c and/or the fourth sensor 130d and the movement amount can be calculated.

Hereinabove, with reference to FIG. 20, an example is described in which the detection results of the first sensor 130a and the fourth sensor 130d are used, but the sensors of which the detection results are referred are not limited thereto, and it is also possible to change which sensor is used depending on the direction in which the rebar binding robot 100 is advancing, for example. As described above, when the end R10e of the first rebar R10 is detected by the first sensor 130a, the rebar binding robot 100 is not limited to the case of performing the lateral movement in the direction of the fourth sensor 130d. For example, when the end R10e of the first rebar R10 is detected by the first sensor 130a, the rebar binding robot 100 may perform the lateral movement in the direction of the third sensor 130c. Also, for example, when the end R10e of the first rebar R10 is detected by the second sensor 130b, the rebar binding robot 100 may perform the lateral movement in the direction of the third sensor 130c, or when the end R10e of the first rebar R10 is detected by the second sensor 130b, the rebar binding robot 100 may perform the lateral movement in the direction of the fourth sensor 130d.

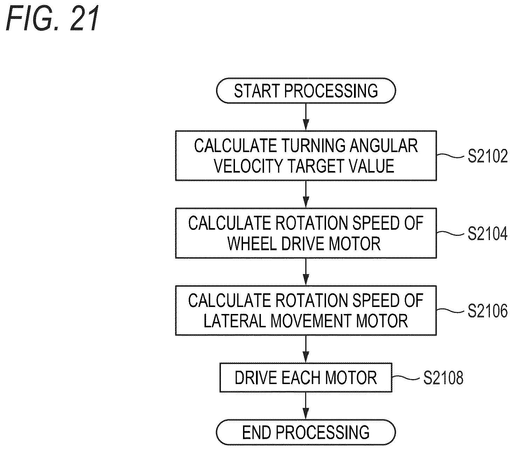

With reference to FIG. 21, the method for moving the rebar binding robot 100 along the first rebar will be described. FIG. 21 is a flowchart of a method for moving the rebar binding robot 100 along the first rebar.

First, a turning angular velocity target value which indicates the target value of turning speed of the rebar binding robot 100, is calculated (S2102). The turning angular velocity target value may be calculated based on the detection results by various sensors of the rebar binding robot 100, for example, by any algorithm such as PID control, pure-pursuit control, and MPC control (model predictive control). The turning angular velocity target value may be calculated, for example, based on the distance (deviation) between the reference position and the first rebar. The reference position is not limited, but may be, for example, a predetermined position in the rebar binding robot 100, specifically, the position of the sensor 130 such as the first sensor 130a and the second sensor 130b, the center of the left and right dimensions of the rebar binding robot 100, or the center of gravity. In addition, the turning angular velocity target value may be calculated, for example, based on the distance between the detected intersection points (including the distance in the direction along the first rebar from the reference position to the intersection point as well as the distance from the reference position to the intersection point). Further, the turning angular velocity target value may be calculated, for example, based on the angle (amount of misalignment) between the direction of the rebar binding robot 100 and the direction of the first rebar. In addition, the turning angular velocity target value may be calculated, for example, based on a target point (which may be referred to as the forward gaze point) set on the target path.

Next, the rotation speed of each wheel drive motor 124 is calculated based on the turning angular velocity target value (a signal indicating the target value is an example of a "control signal") (S2104). Specifically, for example, when the direction of the turn in the turning angular velocity target value is the right direction, each rotation speed may be calculated such that as the magnitude of the angular velocity of turn increases, the rotation speed of the first wheel drive motor 124a (an example of a "left front speed") and the rotation speed of the third wheel drive motor 124c (an example of a "left rear speed"), which are the drive motors on the left side, become larger than the rotation speed of the second wheel drive motor 124b (an example of a "right front speed") and the rotation speed of the fourth wheel drive motor 124d (an example of a "right rear speed"), which are drive motors on the right side. Similarly, for example, when the direction of the turn in the turning angular velocity target value is left, each rotation speed may be calculated such that as the magnitude of the angular velocity of turn increases, the rotation speed of each of the second wheel drive motor 124b and the fourth wheel drive motor 124d, which are the drive motors on the right side, become larger than the rotation speed of the first wheel drive motor 124a and the third wheel drive motor 124c, which are drive motors on the left side.

Next, the rotation speed of each of the lateral movement motors 146 is calculated (S2106). The direction and the rotation speed of each of the lateral movement motors 146 may be calculated based on, for example, a turning angular velocity target value indicating the target value of the turning speed of the rebar binding robot 100 (a signal indicating the target value is an example of a "control signal").

For example, when the turning angular velocity target value indicates a turn to the right, the direction and the rotation speed of each lateral movement motor 146 may be the direction and the rotation speed such that the front traveling unit 12A moves relatively to the left with respect to the rear traveling unit 12B. Here, the direction and the rotation speed such that the front traveling unit 12A moves relatively to the left with respect to the rear traveling unit 12B may be, for example, the direction to the left and any rotation speed for the front lateral movement motor 146a, and the direction to the left and the rotation speed smaller than the rotation speed of the front lateral movement motor 146 for a rear lateral movement motor 146b. Otherwise, the direction and the rotation speed such that the front traveling unit 12A moves relatively to the left with respect to the rear traveling unit 12B may be, for example, the direction to the left and any rotation speed for the front lateral movement motor 146a, and the direction to the right and any rotation speed for the rear lateral movement motor 146b.

For example, when the turning angular velocity target value indicates a turn to the right, the direction and the rotation speed of each lateral movement motor 146 may be the direction and the rotation speed such that the front traveling unit 12A moves relatively to the right with respect to the rear traveling unit 12B. Here, the direction and the rotation speed such that the front traveling unit 12A moves relatively to the right with respect to the rear traveling unit 12B may be, for example, the direction to the right and any rotation speed for the front lateral movement motor 146a, and the direction to the right and the rotation speed smaller than the rotation speed of the front lateral movement motor 146 for the rear lateral movement motor 146b. Otherwise, the direction and the rotation speed such that the front traveling unit 12A moves relatively to the right with respect to the rear traveling unit 12B may be, for example, the direction to the right and any rotation speed for the front lateral movement motor 146a, and the direction to the right and any rotation speed for the rear lateral movement motor 146b.

In addition, the direction and the rotation speed of each of the lateral movement motors 146 may be calculated based on the rotation speed of, for example, the first wheel drive motor 124a, the second wheel drive motor 124b, the third wheel drive motor 124c, and the fourth wheel drive motor 124d. In particular, the direction and the rotation speed of each of the lateral movement motors 146 may be calculated, for example, based on the difference between the rotation speed of the first wheel drive motor 124a and the rotation speed of the second wheel drive motor 124b, or the difference between the rotation speed of the third wheel drive motor 124c and the rotation speed of the fourth wheel drive motor 124d.

For example, when the rotation speed of the first wheel drive motor 124a is greater than the rotation speed of the second wheel drive motor 124b by a predetermined amount, the direction and the rotation speed of each of the lateral movement motors 146 may be the direction and the rotation speed such that the front traveling unit 12A moves relatively to the left with respect to the rear traveling unit 12B according to the predetermined amount. For example, when the rotation speed of the third wheel drive motor 124c is greater than the rotation speed of the fourth wheel drive motor 124d by a predetermined amount, the direction and the rotation speed of each of the lateral movement motors 146 may be the direction and the rotation speed such that the front traveling unit 12A moves relatively to the left with respect to the rear traveling unit 12B according to the predetermined amount.

For example, when the rotation speed of the second wheel drive motor 124b is greater than the rotation speed of the first wheel drive motor 124a by a predetermined amount, the direction and the rotation speed of each of the lateral movement motors 146 may be the direction and the rotation speed such that the front traveling unit 12A moves relatively to the right with respect to the rear traveling unit 12B according to the predetermined amount. For example, when the rotation speed of the fourth wheel drive motor 124d is greater than the rotation speed of the third wheel drive motor 124c by a predetermined amount, the direction and the rotation speed of each of the lateral movement motors 146 may be the direction and the rotation speed such that the front traveling unit 12A moves relatively to the right with respect to the rear traveling unit 12B according to the predetermined amount.

Next, each wheel drive motor 124 and each lateral movement motor 146 are driven based on the calculated rotation speed, respectively (S2108). For example, each of the first wheel drive motor 124a, the second wheel drive motor 124b, the third wheel drive motor 124c, and the fourth wheel drive motor 124d may be driven based on the rotation speed calculated in step S2102. Accordingly, the first traveling unit 121a, the second traveling unit 121b, the third traveling unit 121c, and the fourth traveling unit 121d are driven along the front-rear direction of the rebar binding robot 100.

Further, for example, each of the front lateral movement motor 146a and the rear lateral movement motor 146b may be driven based on the rotation speed calculated in step S2104. Accordingly, the front traveling unit 12A and the rear traveling unit 12B are driven to be relatively movable along the left-right direction of the rebar binding robot 100.

In this manner, the first traveling unit 121a, the second traveling unit 121b, the third traveling unit 121c, and the fourth traveling unit 121d, as well as the front traveling unit 12A and the rear traveling unit 12B are driven, respectively, and accordingly, the rebar binding robot 100 moves in the front-rear direction and turns in the left-right direction. The above steps S2102 to S2108 are repeatedly executed until the predetermined ending conditions are satisfied.

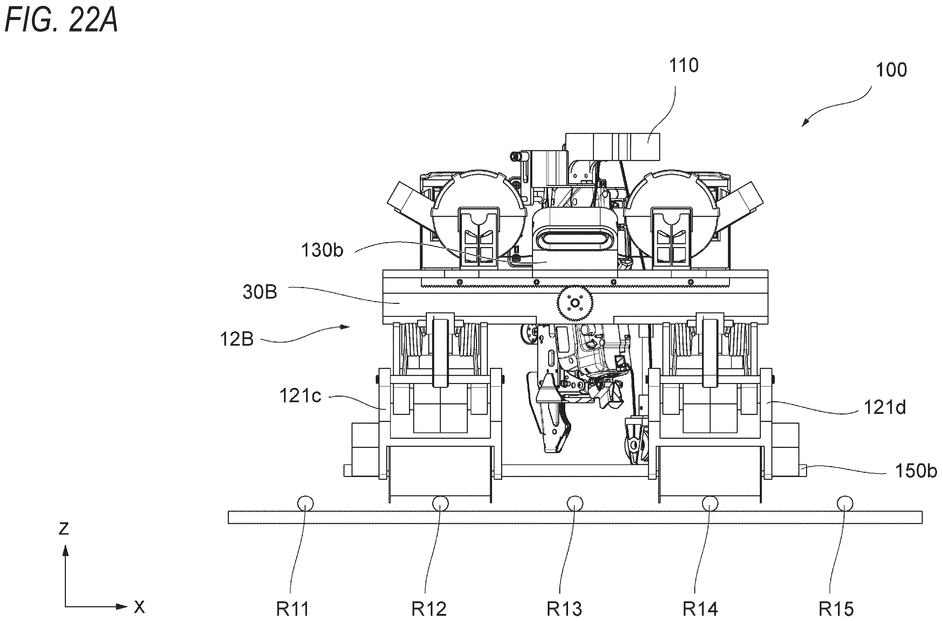

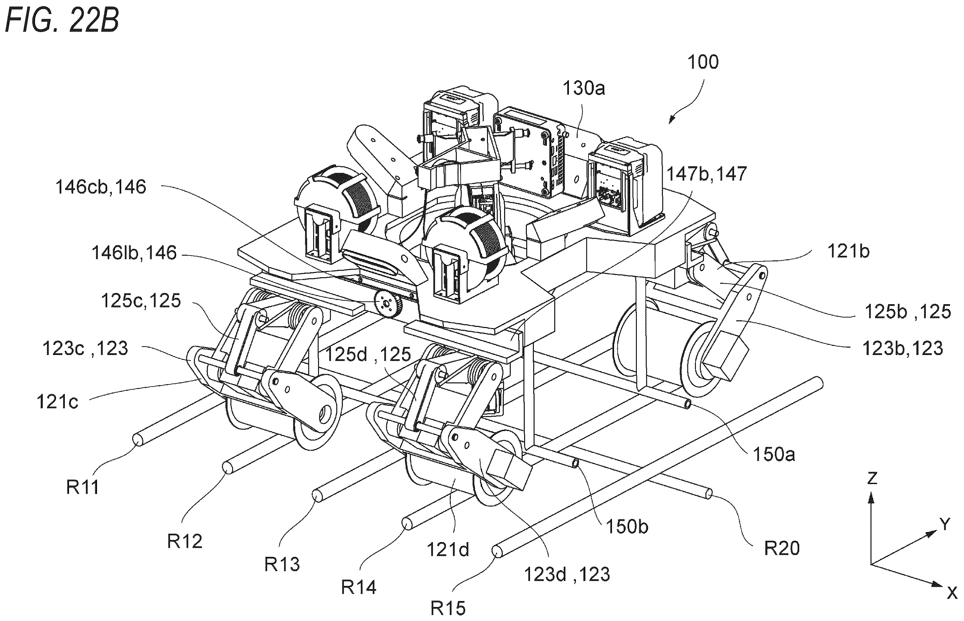

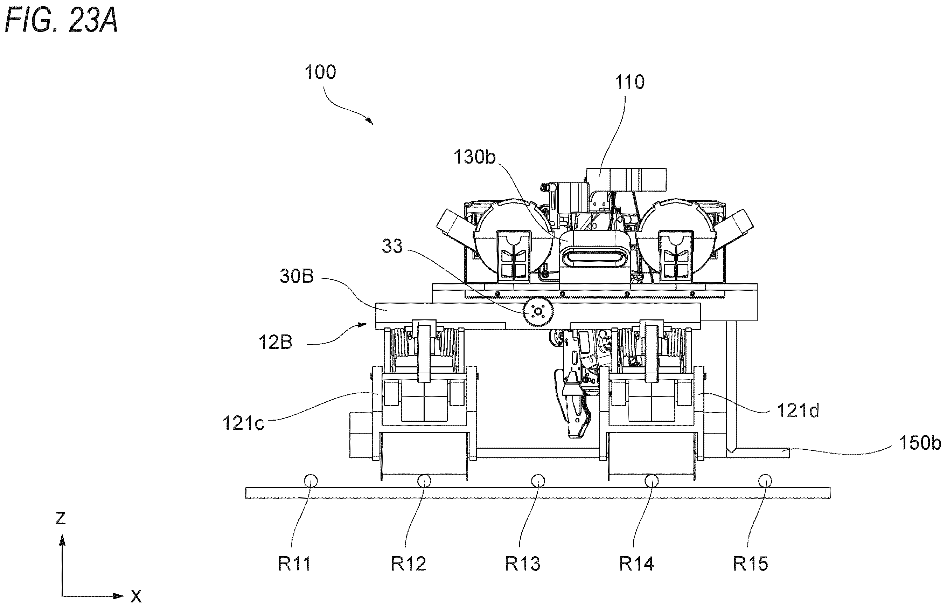

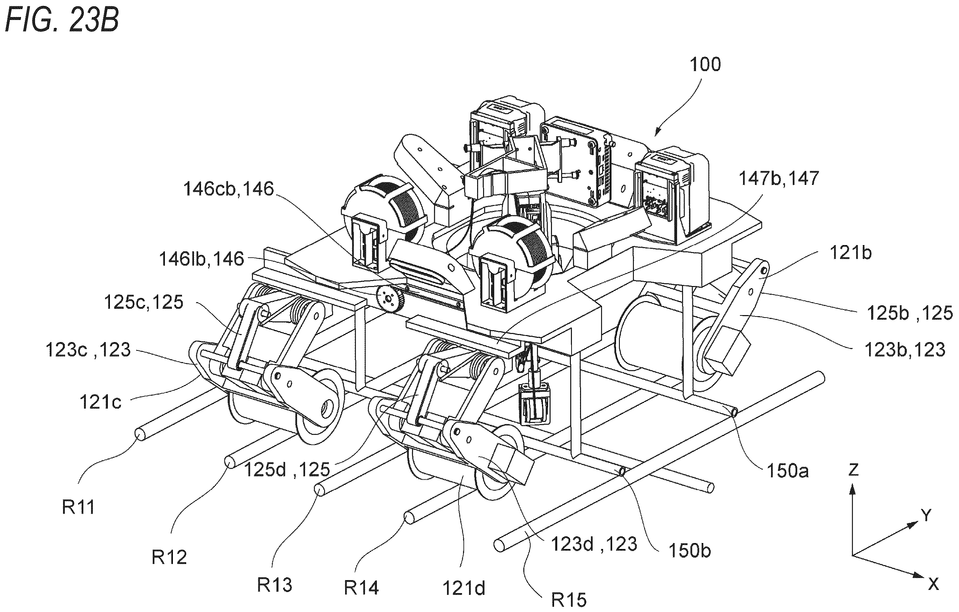

An example of the lateral movement of the rebar binding robot 100 will be described below with reference to FIGS. 22A to 27B. FIGS. 22A to 27B are views of the rebar binding robot 100 in lateral movement, FIGS. 22A, 23A, ..., 27A are views of the rebar binding robot 100 as viewed from the rear, and FIGS. 22B, 23B, ..., 27B are views of the rebar binding robot 100 as viewed obliquely from above.

FIGS. 22A and 22B illustrate the rebar binding robot 100 before starting the lateral movement. As illustrated in FIGS. 22A and 22B, the rebar binding robot 100 travels over the first rebars R12 and R14.

Next, the rebar binding robot 100 starts the lateral movement. In the embodiment of the present disclosure, as described above, it is determined to start the lateral movement when, for example, it is determined based on the detection results by the first sensor 130a that the rebar binding robot 100 has reached or is approaching the vicinity of the end R10e of the first rebar R10. FIGS. 23A and 23B illustrate a state when the rebar binding robot 100 starts the lateral movement. As illustrated in FIGS. 23A and 23B, the rebar binding robot 100 moves in the direction in which the main body unit 140 moves (X direction) without moving the traveling unit 121. As illustrated in FIGS. 23A and 23B, in this case, the first traveling unit 121a and the second traveling unit 121b are respectively present on the first rebar R12 and the first rebar R14 without moving. In this case, the support bars 150a and 150b are not in contact with any of the rebars.

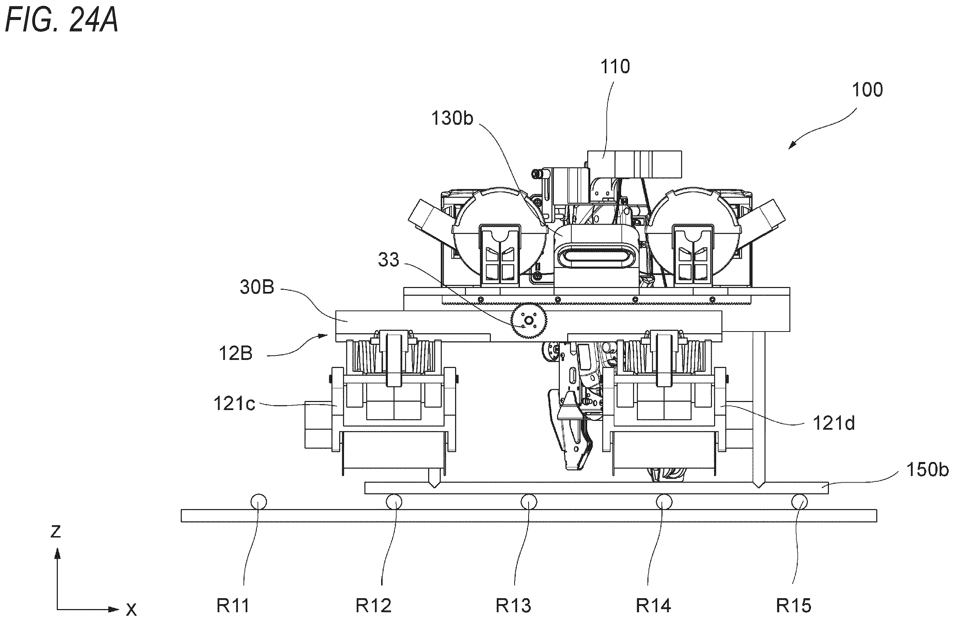

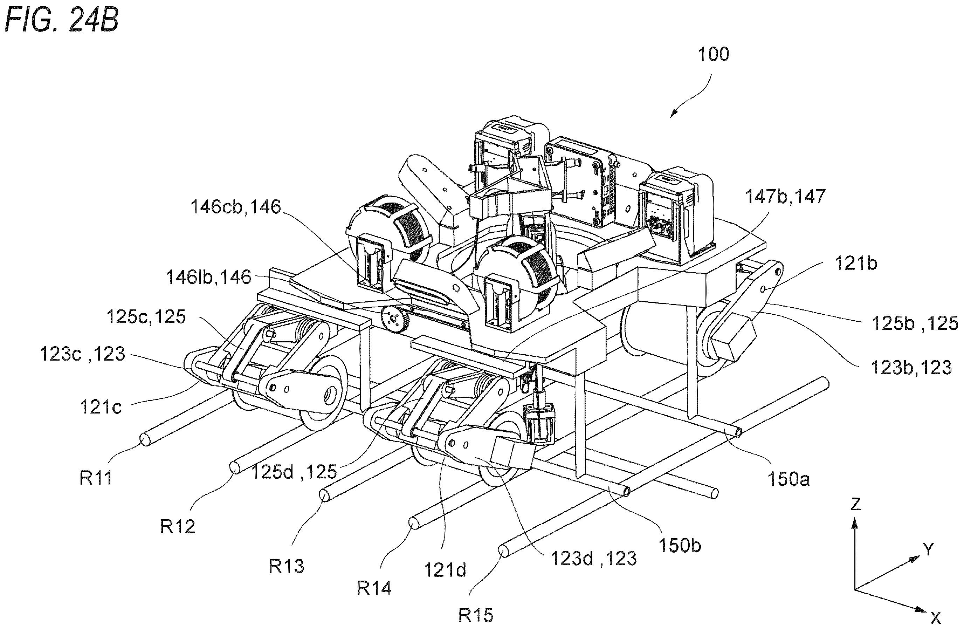

Next, the rebar binding robot 100 moves the traveling unit 121 (lower end of the traveling unit 121) relatively upward with respect to the first rebar R10. As illustrated in FIGS. 24A and 24B, the lower end of the traveling unit 121 in the -Z direction is raised upward in the Z direction (+Z direction) in FIGS. 24A and 24B. In this case, for example, the first main body side link portion 125a and the first roller side link portion 123a move in the direction of relatively approaching each other (that is, the first main body side link portion 125a and the first roller side link portion 123a close). That is, the first main body side link portion 125a and the first roller side link portion 123a move such that the angle formed between the first main body side link portion 125a and the first roller side link portion 123a becomes smaller. Similarly, for the second traveling unit 121b, the third traveling unit 121c, and the fourth traveling unit 121d, the second main body side link portion 125b and the second roller side link portion 123b, the third main body side link portion 125c and the first roller side link portion 123c, and the fourth main body side link portion 125d and the fourth roller side link portion 123d respectively move in the closing direction.

When a main body side link portion 125 and a roller side link portion 123 close and the lower end of the traveling unit 121 is raised, the support bars 150a and 150b are relatively lowered. When the traveling unit 121 moves away from the first rebar R10, the support bars 150a and 150b are in contact with the first rebar R10. For example, the traveling unit 121 may be configured such that the length in the Z direction can be changed by closing the main body side link portion 125 and the roller side link portion 123 (the first main body side link portion 125a and the first roller side link portion 123a, the second main body side link portion 125b and the second roller side link portion 123b, the third main body side link portion 125c and the third roller side link portion 123c, and the fourth main body side link portion 125d and the fourth roller side link portion 123d) which correspond to a configuration supporting the roller (the first roller portion 122a, the second roller portion 122b, the third roller portion 122c, and the fourth roller portion 122d) using a motor or the like (for example, the first wheel height change motor 126a, the second wheel height change motor 126b, the third wheel height change motor 126c, and the fourth wheel height change motor 126d illustrated in FIG. 7). A roller portion 122 may be raised by closing the main body side link portion 125 and the roller side link portion 123, and the roller portion 122 may be spaced apart from the first rebar R10.

As illustrated in FIGS. 24A and 24B, the support bars 150a and 150b are in contact with, for example, the first rebars R11 to R14. In this manner, the entirety of the rebar binding robot 100 is supported by the support bars 150a and 150b.

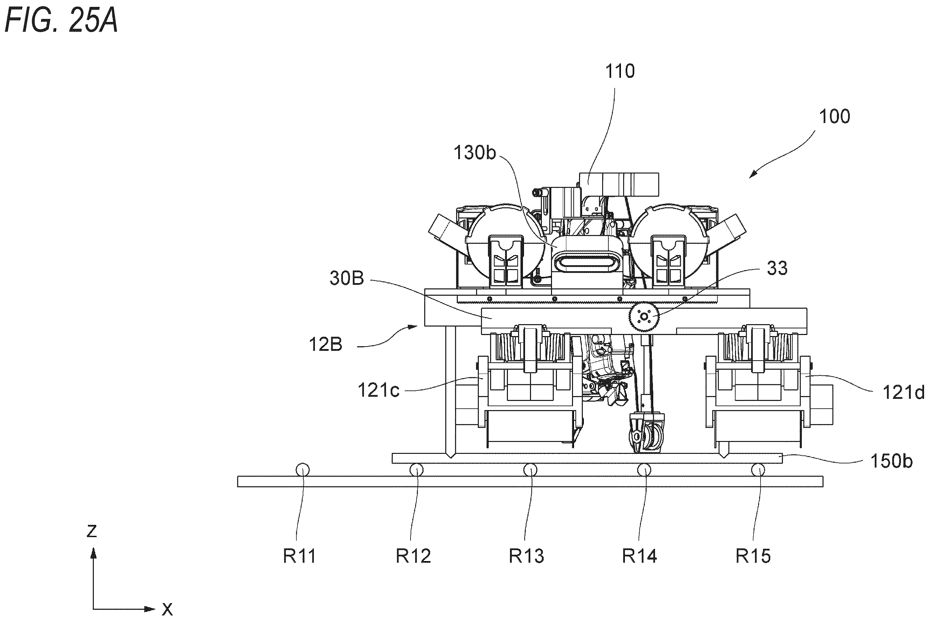

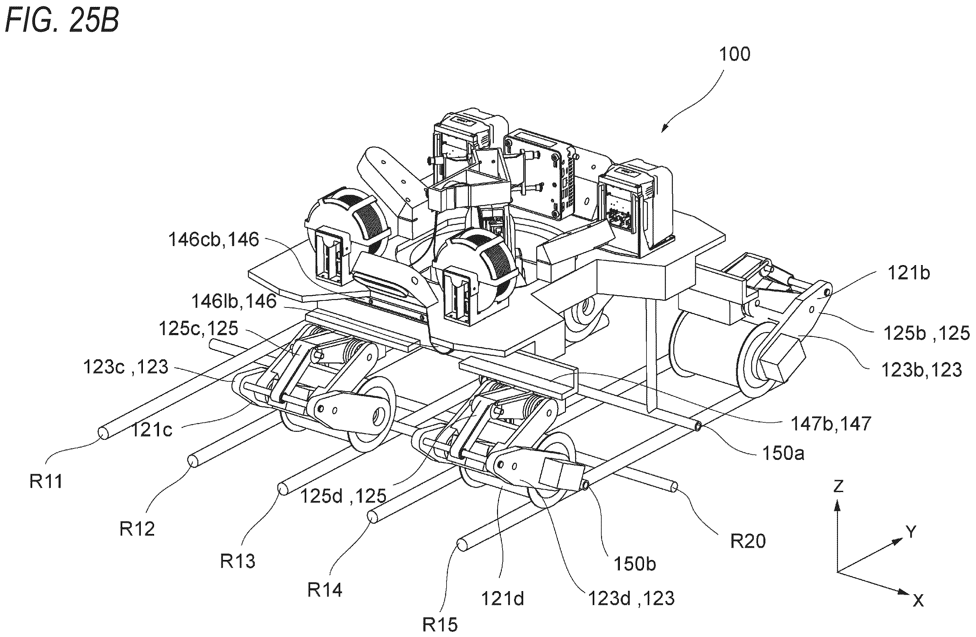

Next, the traveling unit 121 of the rebar binding robot 100 moves in the X direction. As illustrated in FIGS. 25A and 25B, the first traveling unit 121a and the third traveling unit 121c, and the second traveling unit 121b and the fourth traveling unit 121d, which were respectively in contact with the first rebar R12 and the first rebar R14, are moved above the first rebar R13 and the first rebar R15. In this case, none of the first traveling unit 121a to the fourth traveling unit 121d are in contact with the first rebar R10, and the support bars 150a and 150b are in contact with the first rebar R10 (first rebars R12 to R15) and support the rebar binding robot 100.

Next, the main body side link portion 125 and the roller side link portion 123 of the traveling unit 121 are opened. This causes the lower end of the traveling unit 121 in the -Z direction to be relatively lowered with respect to the first rebar R10. In this case, for example, the first main body side link portion 125a and the first roller side link portion 123a move in the direction relatively away from each other (that is, the first main body side link portion 125a and the first roller side link portion 123a close). That is, the first main body side link portion 125a and the first roller side link portion 123a move such that the angle formed between the first main body side link portion 125a and the first roller side link portion 123a becomes larger. Similarly, for the second traveling unit 121b, the third traveling unit 121c, and the fourth traveling unit 121d, the second main body side link portion 125b and the second roller side link portion 123b, the third main body side link portion 125c and the first roller side link portion 123c, and the fourth main body side link portion 125d and the fourth roller side link portion 123d respectively move in the opening direction.

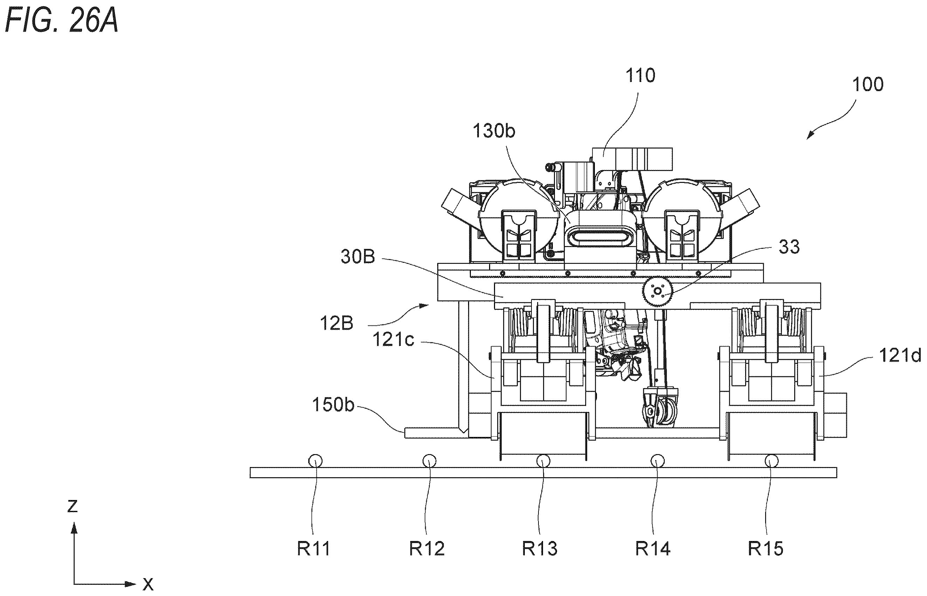

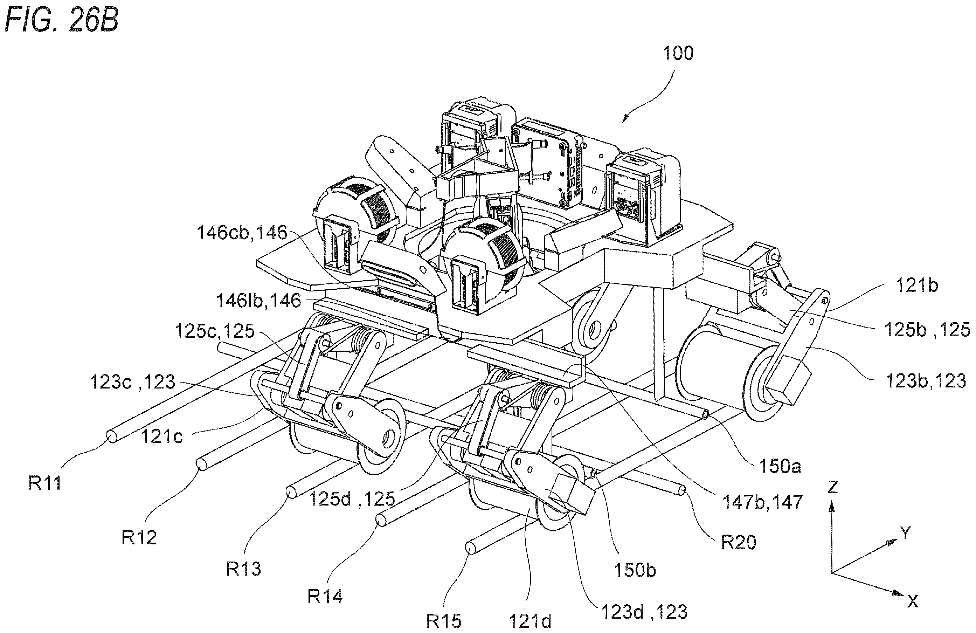

As illustrated in FIGS. 26A and 26B, the lower end of the traveling unit 121 in the -Z direction is lowered downward in the Z direction (-Z direction) in FIGS. 26A and 26B. As illustrated in FIGS. 26A and 26B, the first traveling unit 121a and the third traveling unit 121c are in contact with the first rebar R13, and the second traveling unit 121b and the fourth traveling unit 121d are in contact with the first rebar R15. Therefore, the support bars 150a and 150b are relatively raised with respect to the first rebar R10. Therefore, in this state, the rebar binding robot 100 is supported by the traveling unit 121.

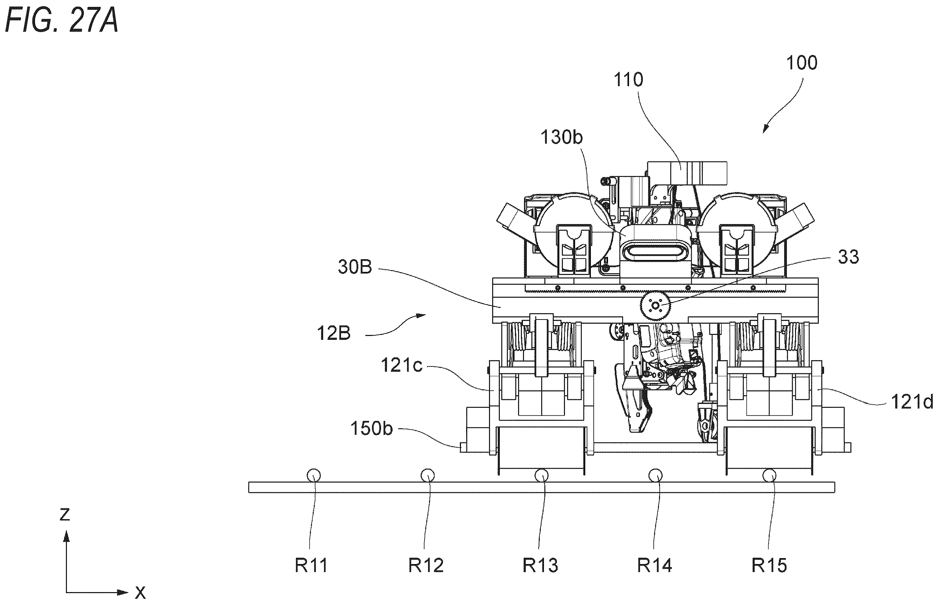

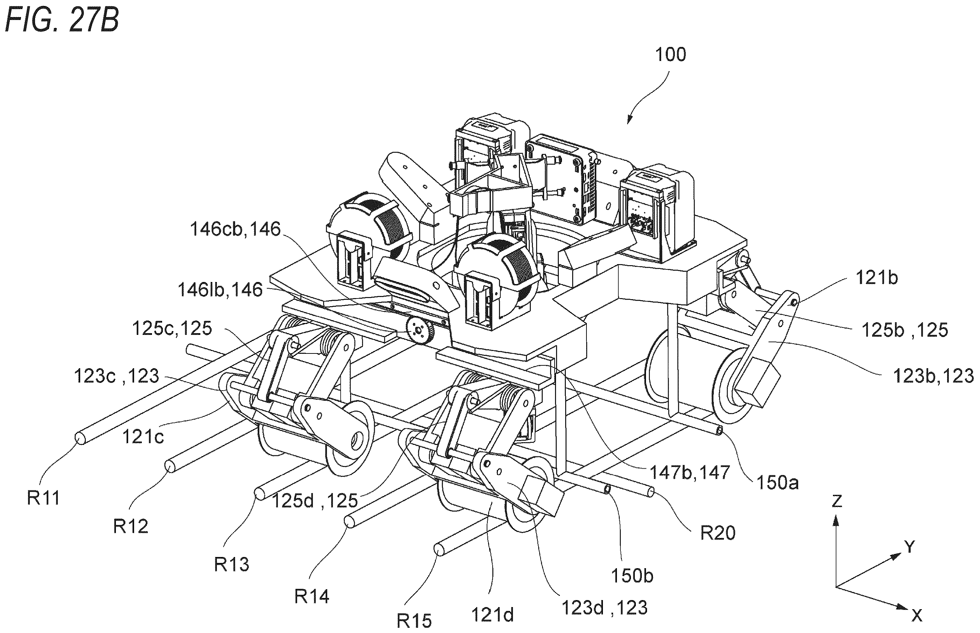

Next, as illustrated in FIGS. 27A and 27B, the main body unit 140 moves in the X direction. Similar to what is described above with reference to FIGS. 23A and 23B, the lateral movement (here, for example, movement in the horizontal direction (movement in the X direction)) of the main body unit 140 illustrated in FIGS. 27A and 27B may be performed, for example, by rotating and driving the lateral movement roller 33 using the front lateral movement motor 146a and the rear lateral movement motor 146b, which are not illustrated in FIGS. 25A and 25B. In this manner, the lateral movement of the rebar binding robot 100 is completed. The rebar binding robot 100 starts traveling, for example, on the first rebar R13 and the first rebar R15, and performs binding work at the intersection point c12 of the first rebar R10 and the second rebar R20 on the first rebar R14.

The above describes an example in which the rebar binding robot 100 moves from the first rebars R12 and R14 to the first rebar R13 and the first rebar R15, but it is also possible to move to a destination separated by the plurality of first rebars R10, for example. In this case, movement can be achieved in the same manner as above, or by repeating the above movement method, movement over a longer distance is possible. In addition, when moving to a destination separated by the plurality of first rebars R10, the movement amount may be calculated based on the detection results of the sensor unit 130 using a similar method.

Furthermore, the rebar binding robot 100 may perform the lateral movement by other methods, not limited to the method described above, and in that case as well, it is possible to calculate the movement amount of the rebar binding robot 100 based on the detection results of the sensor unit 130 in accordance with the movement amount calculation method in the embodiment of the present disclosure, and by using the movement amount calculation method in the embodiment of the present disclosure, it is possible to smoothly advance the movement of the rebar binding robot 100.

As described above, the rebar binding robot 100 according to the embodiment of the present disclosure includes the traveling unit 121 configured to be capable of traveling on the rebar group R including the plurality of first rebars R1 of which the extension direction is the first direction (Y direction) and the plurality of second rebars R2 of which the extension direction is the second direction (X direction) that intersects with the first direction (Y direction) and that are arranged to intersect the first rebars R1, the sensor unit 130 configured to be capable of detecting at least one first rebar R10 and/or at least one second rebar R20, and the first rebar determination section 164al and/or the second rebar determination section 164a2 (also referred to as a "rebar position calculation unit" in the present embodiment) configured to calculate the positions of the at least one first rebar R10 and/or at least one second rebar R20 detected by the sensor unit 130 based on the pixel values of a plurality of pixels that form a two-dimensional image generated by the detection results of the sensor unit 130. The rebar binding robot 100 according to the embodiment of the present disclosure can streamline the process of calculating the positions of the first rebar R10 and/or the second rebar R20 by calculating the positions of the first rebar R10 and/or the second rebar R20 based on a two-dimensional image generated by the detection results of the sensor unit 130. Therefore, the efficiency of the rebar detection process in the rebar blood complexion work of the rebar binding robot 100 can be improved. For example, by performing calculations based on two-dimensional images as detection results of the sensor units, a calculation load can be reduced compared to when calculating the position of the rebar using three-dimensional data.

Improvements in the technical level of the various units that constitute the rebar binding robot 100 have made it possible to perform rebar binding work faster and more efficiently. In order to make the rebar binding work faster, it is considered desirable to make the process of detecting rebars and the intersection points where the binding of the rebars is performed and the rebars are bound to each other. The rebar binding robot 100 according to the embodiment of the present disclosure can improve the efficiency of the rebar detection process, thereby contributing to making the rebar binding work faster.

In addition, the rebar binding robot 100 according to the embodiment of the present disclosure includes, for example, the rebar binding unit 110 configured to bind the intersection points c12 between the first rebars R10 and the second rebars R20 of the rebar group including the plurality of first rebars R10 of which the extension direction is the first direction (Y direction) and the plurality of second rebars R20 of which the extension direction is the second direction (X direction) intersecting the first direction (Y direction) and arranged to intersect the first rebars R10, the traveling unit 121 configured to capable of traveling on the first rebar R10 and/or the second rebar R20, the first sensor 130a and the second sensor 130b configured to be capable of detecting at least one first rebar R10 and/or at least one second rebar R20 and arranged spaced apart from each other along the third direction (Y direction), and the third sensor 130c and the fourth sensor 130d configured to be capable of detecting at least one first rebar R10 and/or at least one second rebar R20 and arranged spaced apart from each other along the fourth direction (X direction) that intersects with the third direction (Y direction). As described above, the rebar binding robot 100 includes four sensors 130 (first sensor 130a, second sensor 130b, third sensor 130c, and fourth sensor 130d), and thus it is possible to efficiently detect, for example, the intersection point c12 of the first rebar R10 and the second rebar R20, as described above. The position of the intersection point c12 can also be confirmed, for example, by installing a sensor in the vicinity of the rebar binding unit 110, but since the rebar binding unit 110 is configured to move up and down, it may be difficult to install a sensor in the vicinity. In the embodiment of the present disclosure, the position of the intersection point c12 can be estimated based on the detection results of the four sensors 130, even when no sensor is installed in the vicinity of the rebar binding unit 110.

In addition, the rebar binding robot 100 according to the embodiment of the present disclosure includes, for example, the rebar binding unit 110 configured to bind the intersection points c12 between the first rebars R10 and the second rebars R20 of the rebar group including the plurality of first rebars R10 of which the extension direction is the first direction (Y direction) and the plurality of second rebars R20 of which the extension direction is the second direction (X direction) that intersects the first direction (Y direction), the traveling unit 121 configured to be capable of traveling on the first rebar R10 and/or the second rebar R20, the sensor unit 130 configured to be capable of detecting the first rebar R10 and/or the second rebar R20, and the movement amount calculation section 174 that calculates the movement amount of the traveling unit 121 based on the position information of the first rebar R10 or the second rebar R20 detected by the sensor unit 130 when the traveling unit 121 moves from the first rebar R10 or the second rebar R20 on which the traveling unit 121 is traveling to another first rebar R10 or another second rebar R20. As described above, the rebar binding robot 100 according to the embodiment of the present disclosure can, for example, determine the position of the rebar which is at the movement destination of the rebar binding robot 100 based on the detection results of the sensor unit 130, and calculate the movement amount of the rebar binding robot 100 based on the position of the rebar at which the traveling unit 121 of the rebar binding robot 100 is traveling and the position of the rebar which is the movement destination. For example, when the rebar binding robot 100 reaches the end of the rebar on which rebar binding work is performed, and when the rebar binding robot 100 moves to the next rebar on which the rebar binding work will be performed, the movement amount can be calculated based on the detection results by the sensor unit 130.

In the embodiment of the present disclosure described above, a case is described as an example in which the rebar binding robot 100 performs the rebar binding work at the intersection point c12 of the first rebar R10 and the second rebar R20 in the rebar group arranged such that the first rebar R10 and the second rebar R20 are orthogonal to each other, but the rebar binding robot 100 according to the embodiment of the present disclosure may also be used in a case where the first rebar R10 and the second rebar R20 are in a non-perpendicular relationship.

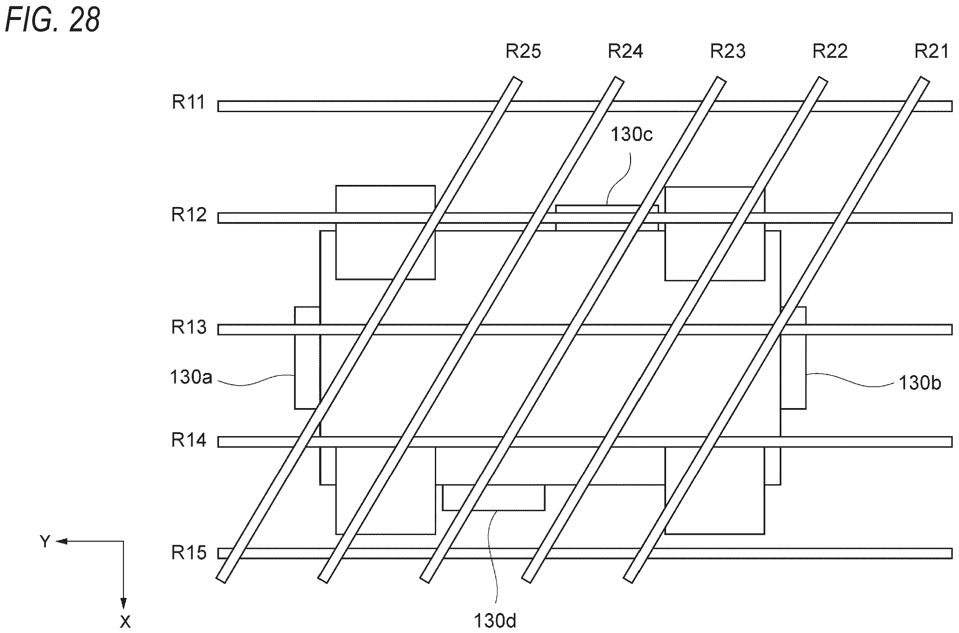

FIG. 28 is a schematic view of a rebar binding robot 200 according to another embodiment of the present disclosure, as viewed from below in the Z direction (-Z direction). As illustrated in FIG. 28, in the present embodiment, the second rebar R20 is arranged at an angle of approximately 30° with respect to the first rebar R10. The rebar binding robot 200 according to the present embodiment differs from the rebar binding robot 100 in the positions of the third sensor 130c and the fourth sensor 130d. The third sensor 130c and the fourth sensor 130d of the rebar binding robot 200 are arranged to be present on a straight line that is inclined at 30° with respect to the X direction. In the rebar binding robot 200, the third sensor 130c and the fourth sensor 130d are aligned with the second rebar R20 and arranged in a direction inclined from the X direction, making it possible to detect the second rebar R20 in a similar manner to the rebar binding robot 100.

In this manner, the arrangement of the first sensor 130a to the fourth sensor 130d may be changed depending on the arrangement configuration of the first rebar R10 and the second rebar R20. The arrangement of the first sensor 130a, the second sensor 130b, the third sensor 130c, and/or the fourth sensor 130d may be changed manually or automatically before starting the rebar binding work, for example, depending on the construction site where the rebar group R to be the subject of the binding work is arranged. Alternatively, even after the rebar binding robot 100 has started traveling, the relationship between the first rebar R10 and the second rebar R20 may be determined based on the detection results of the sensor unit 130, and the arrangement of the first sensor 130a, the second sensor 130b, the third sensor 130c, and/or the fourth sensor 130d may be dynamically changed based on the determination results. In this case, for example, a motor or the like capable of driving the first sensor 130a to the fourth sensor 130d may be provided, and the positions of the first sensor 130a to the fourth sensor 130d may be changed by driving the motor.

The above description is based on the example of a rebar binding robot, but the present invention may be applied to robots other than the rebar binding robot. The tools that the robot has are not limited to rebar binding machines, but can also be nail guns. In this case, the reel part may be a reel wound with nails. The tool that the robot has may be configured as a marker to mark the binding point. In this case, the reel part may be configured as an ink tank for refilling ink.

The present embodiment is described above with reference to specific examples. However, the present disclosure is not limited to these specific examples. Any design modifications to these specific examples made by a person skilled in the art are also included within the scope of the present disclosure as long as they incorporate the features of the present disclosure. The elements of each of the above-described specific examples, as well as their arrangement, conditions, shapes, and the like are not limited to those exemplified, and can be modified as appropriate. The elements of each of the above-described specific examples can be combined in various ways as appropriate, provided no technical contradictions arise.

This application is based on a Japanese patent application filed on January 20, 2023 (Patent Application No. 2023-007172), a Japanese patent application filed on January 20, 2023 (Patent Application No. 2023-007174), a Japanese patent application filed on January 20, 2023 (Patent Application No. 2023-007176), a Japanese patent application filed on January 20, 2023 (Patent Application No. 2023-007177), a Japanese patent application filed on January 20, 2023 (Patent Application No. 2023-007182), a Japanese patent application filed on January 20, 2023 (Patent Application No. 2023-007187), and a Japanese patent application filed on August 10, 2023 (Patent Application No. 2023-131029), the contents of which are incorporated by reference into this application.

### INDUSTRIAL APPLICABILITY

The robot of the present disclosure has improved turning performance with a simple configuration.

### REFERENCE SIGNS LIST

100, 200: rebar binding robot (robot)
30, 30A, 30B: connection portion
12A: front traveling unit
12B: rear traveling unit
110: rebar binding unit
120: moving unit
121: traveling unit
121a: first traveling unit
121b: second traveling unit
121c: third traveling unit
121d: fourth traveling unit
130: sensor unit
130a: first sensor
130b: second sensor
130c: third sensor
130d: fourth sensor
140: main body unit
146: lateral movement motor
150: support bar
160: control unit
162: sensor detection result acquisition section
164: determination section
166: intersection point calculation section
168: rebar binding unit control section
170: traveling control section
172: stop control section
174: movement amount calculation section
176: posture control section
178: motor control section
188: foreign object bypass control section
c12: intersection point
cp12: intersection portion
R10: first rebar
R20: second rebar

## Claims

1. A robot comprising:
a main body;
a front driver which is provided in front of the main body in a first direction and which is configured to drive the robot in the first direction; and
a rear driver which is provided behind the main body in the first direction and which is configured to drive the robot in the first direction, wherein
the front driver and the rear driver are configured to be relatively movable along a second direction perpendicular to the first direction.

2. The robot according to claim 1, wherein
the front driver and the rear driver are configured to be relatively movable along the second direction when the front driver and/or the rear driver are driving the robot in the first direction.

3. The robot according to claim 2, wherein
the front driver and the rear driver are configured such that
the front driver moves toward a left side with respect to the first direction relative to the rear driver in response to a control signal for steering the robot toward a right side with respect to the first direction, and
the front driver moves toward the right side with respect to the first direction relative to the rear driver in response to a control signal for steering the robot toward the left side with respect to the first direction.

4. The robot according to claim 1, wherein
the front driver includes
a front base portion provided at the main body to extend in the second direction,
a right front driver provided at a right side with respect to the first direction of the front base portion, and
a left front driver provided at a left side with respect to the first direction of the front base portion, and
the right front driver and the left front driver are arranged along the second direction.

5. The robot according to claim 4, wherein
a right front speed at which the robot is driven by the right front driver and a left front speed at which the robot is driven by the left front driver are different from each other.

6. The robot according to claim 5, wherein
the front driver and the rear driver are configured to be movable in the second direction in response to a difference between the right front speed and the left front speed.

7. The robot according to any one of claims 1 to 6, wherein
the rear driver includes
a rear base portion provided at the main body to extend in the second direction,
a right rear driver provided at a right side with respect to the first direction of the rear base portion, and
a left rear driver provided at a left side with respect to the first direction of the rear base portion, and
the right rear driver and the left rear driver are arranged along the second direction.

8. The robot according to claim 7, wherein
a right rear speed at which the robot is driven by the right rear driver and a left rear speed at which the robot is driven by the left rear driver are different from each other.

9. The robot according to claim 8, wherein
the front driver and the rear driver are configured to be movable in the second direction in response to a difference between the right rear speed and the left rear speed.

10. The robot according to claim 1, further comprising:
a detector configured to detect an object in a predetermined detection area, wherein
the front driver and the rear driver are configured to be relatively movable along the second direction perpendicular to the first direction based on a detection result of the detector.

11. The robot according to claim 1, further comprising a tool provided at the main body.

12. The robot according to claim 11, wherein the tool is a rebar binding machine configured to bind rebars.
